# EUROPÄISCHE PATENTSCHRIFT

(11) **EP 4 086 568 B1**
(45) Veröffentlichungstag und Bekanntmachung des Hinweises auf die Patenterteilung: **10.09.2025**
(21) Anmeldenummer: 21172776.3
(22) Anmeldetag: 07.05.2021
(51) Int. Cl.: G01B 11/24, G01B 21/04, A01G 7/00, G06T 7/557, G03B 17/56, H04N 23/90, H04N 23/957

(54) **ANORDNUNG UND VERFAHREN ZUR CHARAKTERISIERUNG VON VEGETATION**
METHOD AND SYSTEM FOR CHARACTERISING VEGETATION
SYSTÈME ET PROCÉDÉ DE CARACTÉRISATION DE LA VÉGÉTATION

(43) Veröffentlichungstag der Anmeldung: 09.11.2022
(73) Patentinhaber: Helmholtz-Zentrum für Umweltforschung GmbH-UFZ, 04318 Leipzig (DE); Deutsches Zentrum für Luft- und Raumfahrt e.V., 51147 Köln (DE); Friedrich-Schiller-Universität Jena, 07743 Jena (DE); Universität Rostock, 18055 Rostock (DE)
(72) Erfinder: Mollenhauer, Hannes, 04315 Leipzig (DE); Borg, Erik, 16247 Joachimsthal (DE); Truckenbrodt, Sina, 07743 Jena (DE); Mollenhauer, Olaf, 98693 Ilmenau (DE); Wrage-Mönnig, Nicole, 18198 Stäbelow (DE); Lausch, Angela, 06905 Bad Schmiedeberg (DE)
(74) Vertreter: Patentanwälte Bressel und Partner mbB

(56) Entgegenhaltungen:
- US-A1- 2015 019 014
- US-A1- 2017 034 986
- US-A1- 2019 064 363
- US-B2- 10 390 497
- US-B2- 7 412 330

## Beschreibung

Die Erfindung betrifft eine Anordnung und ein Verfahren zur Charakterisierung von Vegetation.

In-situ-Messungen von pflanzenphysiologischen Parametern sind eine wesentliche Basis für die Entwicklung und/oder Validierung von Fernerkundungssensoren, sowie entsprechenden Algorithmen, Verfahren, Missionen, Daten und abgeleiteten Informationsprodukten. Es werden hinsichtlich ihrer Art, ihrer Menge und ihrer Qualität detaillierte In-situ-Daten als Grundlage für Fernerkundungsmissionen benötigt. Um jedoch die geforderten In-situ-Daten insbesondere für die Kalibration und Validierung von Fernerkundungsdaten bereitstellen zu können, sind umfangreiche Messkampagnen erforderlich, die mit Personalaufwand verbunden sind und für die Messstrategien zu entwickeln sind. Arbeiten im Rahmen von Vegetationsfeldkampagnen sind u.U. zeitaufwendig und kräftezehrend. In Folge dessen können Messungen fehlerhaft sein und sich somit negativ auf die Qualität der Entwicklung und/oder Validierung von Fernerkundungssensoren, sowie der entsprechenden Algorithmen und abgeleiteten Informationsprodukten auswirken. Daher ist sicherzustellen, dass die gemessenen Daten wissenschaftlichen Standards genügen.

Unter Vegetation wird die Gesamtheit der natürlich gewachsenen und/oder durch den Menschen kultivierten Pflanzenformationen und Pflanzengesellschaften, die an einem Standort wachsen, verstanden. Größen zur Charakterisierung von Vegetation sind zum Beispiel Vegetationshöhe Blattflächenindex, Bedeckungsgrad und Biomasse.

Die Vegetationshöhe ist die in Zenit-Richtung bestimmte Distanz zwischen der Bodenoberfläche eines Bestands der Vegetation und den am weitesten von der Bodenoberfläche entferntesten Bestandteilen der Vegetationsdecke. Der Blattflächenindex (englisch: LAI = Leaf Area Index) beschreibt das Verhältnis der gesamten einseitigen Blattoberfläche einer Vegetationsdecke (land- oder forstkundlich: Bestand genannt) zur gesamten Grundfläche des betrachteten Bestandes: LAI = einseitige Blattfläche der Vegetationsdecke / Grundfläche des Bestandes. In die "Gesamte Blattoberfläche" werden alle Blattflächen eines Bestands eingerechnet, so dass die gesamte Blattfläche einer Vegetationsdecke sowohl kleiner als auch größer als die betrachte Grundfläche sein kann. Bei LAI > 1 sind nicht mehr alle Blätter bzw. Nadeln von oben zu sehen. Der Bedeckungsgrad ist das Verhältnis der von der Vegetation überdeckten Fläche zur Bestandsgrundfläche, also der Grundriss der Vegetation in einer definierten Bezugsfläche. Er variiert zwischen 0 und 1. Der Bedeckungsgrad wird z. B. in [m²/m²] oder in % angegeben. Er kann auf den Anteil der Bestandsgrundfläche bezogen werden, der ausschließlich durch fotosynthetisch aktives Material überdeckt ist oder den Anteil, der sowohl durch fotosynthetisch aktive als auch inaktive Pflanzenbestandteile bedeckt wird. Biomasse wird unterschiedlich definiert. Die inhaltlich weitestgehende Definition von Biomasse, umfasst die Gesamtheit aller Lebewesen, einschließlich des abgestorbenen Materials. Hier wird unter Biomasse die Gesamtheit von Pflanzen, einschließlich des abgestorbenen Materials verstanden. Als Biomasse zu betrachten sind daher u.a. Pflanzen und Pflanzenbestandteile, pflanzliche Abfälle und Nebenprodukte aus Land- und Forstwirtschaft, Altholz bzw. Gebrauchtholz und Bioabfälle.

Die In-situ-Erfassung des Status und der Dynamik pflanzenphysiologischer Parameter, wie der Biomasse und des Blattflächenindex (LAI), ist eine zentrale Aufgabe bei der Beurteilung des Gesundheitszustandes und der Entwicklung von Pflanzenbeständen. Im Folgenden werden verschiedene Verfahren zur Erhebung von Bestandsparametern erwähnt, welche in destruktive (direkte) und nicht-destruktive (indirekte) Verfahren unterteilt werden.

Die sogenannten direkten Methoden beruhen auf einer destruktiven Vorgehensweise, also der Entnahme des Objektes, das untersucht werden soll, aus dem Bestand. Damit einher geht eine Veränderung der Struktur des Bestandes, welche die Rahmenbedingungen für nachfolgende Messungen beeinflusst. Beispiele für destruktive Verfahren sind die Entnahme von Boden- und Pflanzenproben. Wobei Pflanzenproben, gesamte Pflanzen oder aber auch nur einzelne Komponenten der Pflanzen (z.B. Blätter, Stängel, Früchte) umfassen können. Diese können etwa zur Bestimmung von Flächen gescannt und zur Bestimmung von Feucht- und Trockenmassen ausgewogen werden, um Pflanzenparameter, wie z.B. die Gesamtbiomasse, die Masse des Blattwerkes, die Blattfläche den Blattfeuchtgehalt und die Blatttrockenmasse direkt zu bestimmen.

Indirekte Aufnahmeverfahren sollen nicht zu einer Zerstörung des Bestandes führen, so dass die wiederholte Untersuchung von Bestandsparametern am gleichen Ort möglich ist. Schäden und Zerstörungen am Bestand werden jedoch in der Regel durch Transportarbeiten des Personals im Bestand verursacht. Die Optimierung dieser Arbeiten zielt auf die Verbesserung von Messergebnissen, der Minimierung des personellen Aufwands und der Bestandszerstörung ab. Bei den indirekten Aufnahmeverfahren wird zwischen Verfahren unterschieden, die vor Ort (In-situ) bzw. im Labor angewendet werden und Verfahren, welche die Parameter aus der Ferne detektieren (Fernerkundungsmethoden).

Einige Verfahren, um Bestandsparameter (insbesondere heterogener Bestände) abzuleiten, beruhen auf Schätzverfahren. Ein Beispiel dafür ist z.B. die Messung der Bestandshöhe mit z.B. Stiefeln an denen Messskalen befestigt sind oder Gliederstäbe bzw. Messlatten zur Höhenmessung. Indirekte In-situ-Verfahren zur Bestimmung des LAI können mittels verschiedener Messgeräte realisiert werden, die das von der Vegetation aufgenommene Licht bestimmen und diese Messwerte in LAI-Werte transformieren. Die Mehrzahl dieser Verfahren stützt sich auf die Analyse hemisphärischer photographischer Aufnahmen, die von der Erdoberfläche durch die Vegetationsdecke in Richtung Himmel aufgenommen werden. Diese Aufnahmen werden unter Berücksichtigung verschiedener Einflussgrößen wie Geometrie und Orientierung des Laubes einer Grauwertseparation unterzogen und daraus der LAI abgeleitet. Eine weitere Vorgehensweise ist die Verwendung sogenannter Lichtmesser, mit deren Hilfe das Verhältnis von eingehender und im Bestand gemessener Strahlung bestimmt wird, um daraus den LAI zu ermitteln. Der Bedeckungsgrad kann anhand der indirekten Aufnahmemethode mittels Kamera, welche während der Aufnahme des Fotos orthogonal zur Bodenoberfläche ausgerichtet ist, ermittelt werden. Fotos, die an repräsentativen, d.h. die Bestandsheterogenität widerspiegelnden, Standorten aufgezeichnet werden, können nach erfolgter Bildverarbeitung genutzt werden, um den prozentualen Bedeckungsgrad der Vegetation abzuschätzen. Die Bildverarbeitung kann mit einer Ausweisung der Klassen "Pflanzen", "Schatten", "freier Boden" abgeschlossen werden.

Der LAI sowie der Bedeckungsgrad können zudem aus Fernerkundungsdaten abgeleitet werden. Dazu können empirisch ermittelte Beziehungen zwischen stichprobenartig In-situ bestimmten Vegetationsindizes (wie z.B. dem Normalized Difference Vegetation Index (NDVI)) und Fernerkundungssignalen, die mit den stofflichen, pflanzenphysiologischen Zuständen der Vegetation in Beziehung gesetzt werden können, genutzt werden. Mittels der Beziehung kann für jedes Pixel der Fernerkundungsdaten der Wert für den Vegetationsparameter (die charakterisierende Größe) abgeschätzt werden.

Bekannte Verfahren nutzen insbesondere optoelektronische Sensoren, Radar-, Laser- und Ultraschallsensoren um Vegetationsparameter zu bestimmen.

Ein wesentlicher Aspekt der Datengewinnung zur Bereitstellung einer ausreichend großen Datenmenge bei gleichzeitig hoher Datenqualität ist die zugrunde gelegte Messstrategie. Diese wird einerseits durch die Zielparameter (Umweltparameter), die Verteilung der Art und Weise erforderlicher Einzelmessungen bzw. der Konfiguration lokaler und überregionaler Messplots und der zur Durchführung der Messungen genutzten Hilfs- und Messinstrumente und andererseits durch den Personalaufwand definiert.

Ein weiterer Aspekt, der sich neben dem eigentlichen Messaufwand des/der Umweltparameter unmittelbar auf den erforderlichen Personalaufwand einer Kampagne auswirken kann, ist der jeweilige Messaufbau des/der Plot(s). Das gilt insbesondere dann, wenn eine Kampagne über einen längeren Zeitraum erfolgt und die Nutzung der untersuchten Fläche (z.B. landwirtschaftliche Nutzung), nur einen temporären Aufbau der Messgeräte ermöglicht (z.B. zwischen Aussaat und Ernte landwirtschaftlicher Nutzpflanzen). Der Aufbau einer Versuchsanlage zur Ausführung einer Messstrategie, kann u.U. sehr zeitaufwendig sein. Dabei werden u.a. Messstrecken und Messkonfigurationen ausgelegt bzw. aufgestellt, welche die Messung der erforderlichen Umweltparameter in einer standardisierten Form ermöglichen.

Zurzeit werden Messungen zur Vegetation an Lysimetern nicht automatisch und permanent, sondern händisch und vielfach spontan oder periodisch durchgeführt. Die automatische Messung von In-situ-Parametern der Vegetation wird zunehmend z.T. auch mit automatischen Systemen vorgenommen.

Die Parameter, die den hydrologischen Prozess in den Lysimeterbehältern beeinflussen bzw. charakterisieren, werden durch eine Vielzahl verschiedener und redundanter Messsysteme in hoher thematischer und zeitlicher Auflösung erfasst. Die Prozesse, die auf dem Lysimeter identifiziert werden können, werden hingegen nicht alle in dieser thematischen und zeitlichen Auflösung bemessen. Dies betrifft vor allem den Vegetationsbestand auf den Lysimeterbehältern. Insbesondere an dieser Stelle setzt die Erfindung an. Dazu sind folgende Aspekte zu berücksichtigen:
Das Messsystem sollte nach Möglichkeit den Messvorgang des Lysimeters nicht oder nur geringfügig beeinflussen. Das gilt sowohl für die Strahlungsfaktoren als auch für die hydrologisch relevanten Faktoren.

Bekannt ist es, optoelektronische Sensoren senkrecht oder nahezu senkrecht zum Boden des Bestandes auszurichten. Daher muss bei der Auswertung mit Signalen von Boden (mit variierender Bodenfeuchte), Schatten, Pflanzenresten und Pflanzen gerechnet werden, die das Ergebnis wesentlich beeinflussen können. Die Messung mittels optoelektronischen Systemen kann auf der Nutzung spektraler Informationen beruhen und es kann daher eine Zustandsinformation aus dem Spektralverhalten des Zielobjektes (Bestand) abgeleitet werden. Problematisch ist dabei die Trennung des Bodensignals und des Bestandssignals.

Bei Verfahren, die Radar-Sensoren nutzen, werden Doppellaufzeit zwischen Sensor und Zielobjekt sowie Intensitäten und Polarisationen genutzt, die z.B. durch Unterschiede in der Dielektrizitätskonstante der verschiedenen Pflanzenbestandteile (und daher vor allem durch den Wassergehalt der Zielobjekte) beeinflusst sind. Eine weitere Einflussgröße stellt die Rauigkeit und Struktur des Zielobjektes dar. Daher kann mit einem komplexen integralen Signal gerechnet werden. Während bei den optoelektronischen Sensoren ein passives System zur Anwendung kommt, setzen Radarsensoren eine mitgeführte emittierende Energiequelle voraus.

Verfahren, die Ultraschallsignale nutzen, arbeiten nach dem Echo-Prinzip. Der Sender ist gegen Bestand und Boden gerichtet. Daher muss bei der Auswertung mit Restsignalen durch Boden bzw. Pflanzenreste gerechnet werden, die das Ergebnis wesentlich beeinflussen können.

US 10 390 497 B2 beschreibt ein Verfahren zur Pflanzenbehandlung, umfassend: Empfangen einer ersten Messung für eine Pflanze von einem Sensor, wenn sich der Sensor innerhalb eines geografischen Gebiets bewegt, das eine Vielzahl von Pflanzen umfasst; als Reaktion auf den Empfang der ersten Messung und vor dem Empfang einer zweiten Messung für eine zweite Anlage der Vielzahl, Bestimmen eines Satzes von Behandlungsmechanismus-Betriebsparametern für die Anlage, um einen Ausgabeparameter des geografischen Bereichs basierend auf der ersten Messung und historischen Messungen zu optimieren für das geografische Gebiet.

US 2017/034986 A1 offenbart Systeme und Verfahren zur Optimierung von Fruchtbeständen. Ein Feld wird mit einer ersten Populationsvorschrift bepflanzt, die auf der Grundlage eines ersten Datensatzes bestimmt wird, der vorhergesagtes Wetter enthält. Eine nachfolgend ermittelte zweite Populationsvorschrift wird basierend auf einem nach dem Pflanzen ermittelten zweiten Datensatz ermittelt, und die gepflanzte Kultur wird gemäß der zweiten Populationsvorschrift ausgedünnt.

US 2019/064363 A1 beschriebt ein System zur Erfassung von Pflanzenparametern, umfassend: einen Pflanzenmorphologiesensor mit einem ersten Sichtfeld und konfiguriert zum Aufzeichnen einer Morphologiemessung eines Pflanzenteils und einer Umgebung neben der Pflanze, einen Pflanzenphysiologiesensor mit einem zweiten Sichtfeld und konfiguriert eine pflanzenphysiologische Parametermessung eines Pflanzenteils und einer Umgebung neben der Pflanze aufzuzeichnen, wobei das zweite Sichtfeld mit dem ersten Sichtfeld überlappt; einen Träger, der den Pflanzenmorphologiesensor statisch mit dem Physiologiesensor koppelt, und ein Rechensystem, das konfiguriert ist zum Identifizieren eines Pflanzenpixelsatzes innerhalb der Physiologiemessung basierend auf der Morphologiemessung Physiologiewerte für jedes Pixel des Pflanzen-Pixelsatzes zu bestimmen und einen Wachstumsparameter basierend auf den physiologischen Werten zu extrahieren.

US 7 412 330 B2 beschreibt das Bestimmen physikalischer Eigenschaften einzelner Pflanzen innerhalb einer Reihe in einer landwirtschaftlichen Umgebung mittels einer Sensoranordnung, die eine Vielzahl von Sendern und eine entsprechende Vielzahl von Empfängern enthält, die im Wesentlichen einander gegenüberliegend angeordnet sind. Es können auch zusätzliche Sensoren zum Bestimmen anderer Pflanzeneigenschaften, einschließlich Blattmuster und Pflanzenort entlang der Reihenachse, vorhanden sein.

Es ist eine Aufgabe der vorliegenden Erfindung, eine Anordnung zur Charakterisierung von Vegetation anzugeben, die die Möglichkeiten der Charakterisierung erweitert. Es ist ferner eine Aufgabe der vorliegenden Erfindung, ein entsprechendes Verfahren zur Charakterisierung von Vegetation anzugeben.

Die beigefügten Ansprüche definieren den Schutzumfang.

Es wird vorgeschlagen, bei der Erfassung der Vegetation dreidimensionale Bildinformation über die Vegetation zu erzeugen und aus der dreidimensionalen Bildinformation zumindest eine, die Vegetation charakterisierende Größe zu ermitteln.

Eine entsprechende Anordnung weist eine Erfassungseinrichtung zur Erfassung der Vegetation und zur Erzeugung der dreidimensionalen Bildinformation, einen Revolvergeräteträger sowie eine Auswertungseinrichtung zur Ermittlung zumindest einer die Vegetation charakterisierende Größe auf. Unter dreidimensionaler Bildinformation wird örtlich dreidimensionale Bildinformation verstanden, d. h. Bildinformation, die bezüglich eines Koordinatensystems eines dreidimensionalen Raumes definierbar und/oder darstellbar ist. Insbesondere kann zur Charakterisierung der Vegetation zumindest eine der oben genannten Größen verwendet werden wie zum Beispiel der LAI.

Die Erfindung kann beispielsweise in Beständen landwirtschaftlicher Nutzflächen, Wiesen, Rasenflächen sowie Strauch- und Baumbeständen zum Einsatz gebracht werden. Aufgrund der dreidimensionalen Information sind die Möglichkeiten der Charakterisierung erweitert. Insbesondere kann zwischen der Vegetation selbst und der umgebenden Materie wie zum Beispiel Boden unterschieden werden, wenn die dreidimensionale Information ausgewertet wird.

Insbesondere kann mittels der erfindungsgemäßen Anordnung bzw. durch Ausführung des erfindungsgemäßen Verfahrens, z. B. unter Nutzung eines Computers oder Computernetzwerks, dreidimensionale Information über den erfassten Bereich der Vegetation gewonnen werden. Hierdurch kann insbesondere die vertikale Struktur des Pflanzenbestandes erfasst werden.

Insbesondere findet die Erfassung der Vegetation in-situ und indirekt (und somit nicht mittels Fernerkundung) statt. Die Vegetation wird derart erfasst, dass eine Erfassung aus unterschiedlichen Blickwinkeln und zum Beispiel von gegenüberliegenden Seiten des erfassten Bereichs der Vegetation zumindest möglich ist und vorzugsweise auch erfolgt. Dabei wird derselbe Teil (wie zum Beispiel eine Kamera) der Erfassungseinrichtung und/oder werden verschiedene Teile (wie zum Beispiel mehrere Kameras) der Erfassungseinrichtung manuell oder maschinell innerhalb der Vegetation und/oder unmittelbar oberhalb der Vegetation positioniert und/oder bewegt.

Vorzugsweise wird bei der Erfassung die absolute Position bestimmt. Dementsprechend ist die Erfassungseinrichtung mit einer Positionsbestimmungseinrichtung kombiniert, zum Beispiel einem Empfänger eines differentiellen globalen, satellitenbasierten Positionierungssystems (GNSS oder dGNSS). Die absolute (z. B. auf ein Erd-Koordinatensystem bezogene) Position der Erfassungseinrichtung kann insbesondere dazu verwendet werden, die gewonnene dreidimensionale Bildinformation mit weiterer Information über die Vegetation zu kombinieren, zum Beispiel mit weiterer dreidimensionaler Bildinformation, die von der Erfassungseinrichtung oder von einer anderen Erfassungseinrichtung von einem anderen Erfassungsort aus gewonnen wird oder wurde. Auf Basis der kombinierten Information kann dann ausgewertet werden und können die Größen ermittelt werden, welche die Vegetation charakterisieren.

Insbesondere kann der von der Erfassungseinrichtung erfasste Raum gegen Umgebungslicht und somit insbesondere auch gegen Sonnenlicht abgeschirmt sein. Um eine Erfassung des Raumes zu ermöglichen, ist in diesem Fall eine künstliche Beleuchtung vorgesehen, die vorzugsweise ein sonnenlichtähnliches Spektrum erzeugt. Es wird dabei eine möglichst homogene Ausleuchtung des erfassten Raumes angestrebt. Durch die Abschirmung und die künstliche Beleuchtung werden reproduzierbare Erfassungsbedingungen geschaffen.

Mittels der erfindungsgemäßen Anordnung bzw. durch Ausführung des erfindungsgemäßen Verfahrens können automatisch alle fernerkundlich relevanten charakteristischen Größen von Vegetation ermittelt werden (d. h. zumindest ein entsprechender Wert zumindest einer dieser Größen ermittelt werden) und bei einer Kalibrierung bzw. Validierung zumindest eines Fernerkundungssensor verwendet werden.

Die Anordnung weist eine Bewegungseinrichtung zur Bewegung der Erfassungseinrichtung relativ zu der Vegetation auf bzw. kann es daher bei Ausführung des Verfahrens die Erfassungseinrichtung relativ zu der Vegetation bewegt werden. Vorzugsweise wird die Erfassungseinrichtung zumindest auch in eine Erfassungsposition seitlich der Vegetation gebracht, sodass die von der Erfassungseinrichtung erzeugte Bildinformation zumindest auch aus der Erfassungsposition seitlich der Vegetation erzeugte Bildinformation ist. Unter "seitlich" wird insbesondere verstanden, dass die Erfassungsposition nicht oberhalb der höchsten Position der erfassten Vegetation liegt. Alternativ oder zusätzlich kann eine Erfassungseinrichtung wie zum Beispiel eine Lichtfeldkamera über dem zu erfassenden Bereich der Vegetation positioniert und optional darüber bewegt werden, um neben den dreidimensionalen Informationen aus der Erfassung bei horizontalen Blickachsen und leicht gegenüber der Horizontalen geneigten Blickachsen zusätzlich dreidimensionale Informationen aus der Erfassung bei vertikalen Blickachsen oder leicht gegenüber der Vertikalen geneigten Blickachsen zu generieren. Unter einer leichten Neigung wird insbesondere verstanden, dass der Neigungswinkel maximal 45 Grad, zum Beispiel maximal 30 Grad beträgt.

Die Bewegung der Erfassungseinrichtung wird insbesondere dazu benutzt, denselben Bereich der Vegetation aus verschiedenen Erfassungspositionen zu erfassen. Dies schließt nicht aus, dass die Erfassungseinrichtung eine Mehrzahl von Kameras aufweist, die gleichzeitig denselben Bereich der Vegetation ebenfalls aus verschiedenen Erfassungspositionen und vorzugsweise auch bei unterschiedlicher Ausrichtung (zum Beispiel der optischen Achsen) der Kameras erfassen.

Wenn die dreidimensionale Bildinformation wie bevorzugt durch Erfassung der Vegetation aus verschiedenen Blickwinkeln erzeugt wird, wird der Informationsgehalt weiter erhöht und werden die Möglichkeiten der Charakterisierung der Vegetation zusätzlich erweitert. Insbesondere bei Erfassung der Vegetation von einander gegenüberliegenden Seiten können Oberflächenbereiche der Vegetation erfasst werden, die bei Beobachtung aus lediglich einem Blickwinkel durch andere Teile der Vegetation verdeckt sind.

Insbesondere kann die die von der Erfassungseinrichtung erzeugte dreidimensionale Bildinformation
- Intensitätsinformation über Intensitäten der von der Vegetation auf die Erfassungseinrichtung einfallenden elektromagnetischen Strahlung und
- Richtungsinformation über die Errichtung der einfallenden elektromagnetischen Strahlung aufweisen.

Derartige Bildinformation, optional ergänzt um die spektrale Information (Wellenlänge oder Frequenz der erfassten Strahlung), wird auch als plenoptische Information bezeichnet. Grundsätzlich kann plenoptische Information auf verschiedene Weise erzeugt werden, insbesondere auch unter Verwendung einer Mehrzahl von konventionellen Kameras, die jeweils lediglich zweidimensionale Bildinformation erzeugen. Bevorzugt wird es jedoch, zumindest eine plenoptische Kamera (auch Lichtfeldkamera genannt) zu verwenden. Besonders bevorzugt wird die Verwendung einer Mehrzahl plenoptischer Kameras zur Erfassung desselben Bereichs der Vegetation insbesondere gleichzeitig aus verschiedenen Erfassungsrichtungen. Die oben erwähnte Bewegungseinrichtung kann dazu verwendet werden, mindestens eine plenoptische Kamera zu bewegen, um nacheinander oder fortlaufend plenoptische Information zu erzeugen.

Selbstverständlich muss die erwähnte Richtungsinformation nicht explizit als Wert der jeweiligen Richtung der einfallenden elektromagnetischen Strahlung erzeugt und/oder aufgezeichnet (insbesondere durch Abspeicherung entsprechender Daten) werden. Vielmehr kann stattdessen äquivalente Information erzeugt und/oder aufgezeichnet werden. Bekannte plenoptische Kameras erfassen die Richtungsinformation beispielsweise indirekt durch Erfassung eines Ortes innerhalb einer Matrix strahlungssensitiver Elemente (zum Beispiel Fotodioden) zum Beispiel ist die Matrix in eine Vielzahl von Teilgebieten unterteilt, in deren Zentrum jeweils ein Ort liegt, auf denen die erfasste Strahlung entlang einer optischen Achse einfällt. Um diesen zentralen Ort herum verteilt befinden sich viele Orte mit strahlungssensitiven Elementen, die aufgrund der verwendeten Abbildungsoptik Strahlung lediglich aus bestimmten Einfallswinkeln empfangen, welche charakteristisch für den jeweiligen Ort sind. Bei Kenntnis der optischen Eigenschaften der Abbildungsoptik, kann daraus auch auf die Entfernung des Ausgangspunktes der erfassten Strahlung und somit zum Beispiel auf die Entfernung zu einem Oberflächenbereich der erfassten Vegetation geschlossen werden. Insbesondere dies ermöglicht es, wie im Folgenden beschrieben, eine dreidimensionale Punktwolke als Zwischenergebnis der Erfassung der Vegetation zu erzeugen.

Bevorzugt wird es, dass die Anordnung eine Verarbeitungseinrichtung aufweist bzw. bei Ausführung des Verfahrens entsprechend vorgegangen wird, wobei bei der Verarbeitung aus der erzeugten dreidimensionalen Bildinformation eine Anordnung von Punkten in einem dreidimensionalen Koordinatensystem der erfassten Vegetation erzeugt wird. Dabei entspricht jeder der Bildpunkte einem Punkt auf der Oberfläche der Vegetation oder der Oberfläche anderer Materie in dem erfassten Bereich der Vegetation. Zudem wird bei Betrieb der Verarbeitungseinrichtung bzw. bei Ausführung des Verfahrens jedem der Punkte eine Intensität und optional auch eine Wellenlänge oder Frequenz der von dem Punkt ausgehenden elektromagnetischen Strahlung zugeordnet. Wenn daher die spektrale Information den Punkten der Punktwolke zugeordnet ist, ist es auch bevorzugt, dass jedem Punkt oder zumindest einer Vielzahl von Punkten der Punktwolke die Intensität der von dem Punkt auf der Oberfläche ausgehenden Strahlung bei einer Mehrzahl von Wellenlängen oder Frequenzen zugeordnet wird. An diesen Punkten der Punktwolke steht somit spektrale Information nicht nur bei einer Wellenlänge bzw. Frequenz zur Verfügung.

Insbesondere kann es sich bei der erzeugten dreidimensionalen Bildinformation um tomografische Information handeln oder aus der erzeugten dreidimensionalen Bildinformation wird tomografische Information erzeugt, d. h. es liegt dann Bildinformation über eine Vielzahl von Schnittbildern des erfassten Raumes vor. Unabhängig davon, ob tomografische Information erzeugt wird, kann aus den von der Erfassungseinrichtung erzeugten Bildinformation zumindest ein dreidimensionales Bild des erfassten Raumes oder eines Teils davon rekonstruiert werden. Bei der Rekonstruktion kann insbesondere die von einer Mehrzahl von Kameras, insbesondere plenoptischer Kameras, erzeugte Bildinformation über denselben erfassten Raum oder über zumindest einen gemeinsamen überlappenden Raumbereich der Kameras genutzt werden. Oben wurde bereits erwähnt, dass die Bildinformation der Rekonstruktion zum Beispiel in Form einer Punktwolke vorliegen kann.

Insbesondere kann so eine Abbildung/Rekonstruktion des landwirtschaftlichen Bestands stattfinden. Anhand der Abbildung des Bestands können biophysikalische Parameter automatisiert abgeleitet werden. Vorrangig kann dabei auf die Bestimmung fernerkundbarer Parameter bzw. die Vegetation charakterisierende Größen (wie z.B. dem LAI, der Biomasse, der Blattfläche, dem Bedeckungsgrad) zur Dokumentation des Status und der Entwicklung der Vegetation abgezielt werden.

Die Erfindung sieht mehrere Ausführungen vor, z.B.: (1) Stationär montierte Ausführung zur Messung des Vegetationsbestandes auf Lysimeterbehältern und (2) mobile Ausführung zur Erfassung eines Vegetationsbestandes, wobei zumindest eine Erfassungseinrichtung nacheinander verschiedene räumliche Bereiche der Vegetation erfasst, und insbesondere eine linienförmige Tomographie durchführt. Ausführungsbeispiele werden noch beschrieben.

Die Anlage und das Verfahren können eine beliebige Kombination der folgenden Module aufweisen bzw. verwenden:
- Internetschnittstelle zur Kommunikation mit einer Steuerzentrale,
- Übertragungsschnittstelle zur Kommunikation mit einer Steuerzentrale,
- Steuerbarer Geräteträger für zumindest eine Erfassungseinrichtung Messinstrumente, z. B. ausgeführt als schwenkbarer Geräteträgerarm,
- Steuereinheit zur Kontrolle der Messdaten sowie zur Auslösung von Befehlen,
- Bewegungseinrichtung, insbesondere mit verschiedenen Motoren, Pneumatik und/oder Hydraulik zur Erzeugung der Bewegung,
- Übertragungseinrichtung zu verschiedenen Motoren der Bewegungseinrichtung,
- optional Liftmotor und -mechanismus zur Absenkung / Anheben von Messgeräten,
- zum Beispiel Motor zur horizontalen Steuerung des Revolvergeräteträgers,
- Revolverträger für den Austausch von Messinstrumenten,
- Erfassungseinrichtungen, insbesondere Kameras, und/oder andere Messinstrumente,
- Kontrolleinheit zur Überwachung der Ausführung der Steuerbefehle,
- Energieversorgung bzw. Energieanschluss
- Auswertungsmodell zur Konstruktion der tomographischen Information zum Bestand (3D-Datenwolke)
wobei erfindungsgemäß die Anlage und das Verfahren zumindest einen Revolvergeräteträger für den Austausch von Messinstrumenten aufweist bzw. verwendet.

Ausführungsbeispiele der Erfindung und andere Beispiele werden nun unter Bezugnahme auf die beigefügte Zeichnung beschrieben. Die einzelnen Figuren der Zeichnung zeigen:
- Fig. 1: eine stationär montierte Ausführung der Anordnung zur Charakterisierung von Vegetation,
- Fig. 2: eine Draufsicht auf einen Teil der in Fig. 1 dargestellten Anordnung und eine Mehrzahl von Lysimeterbehältern,
- Fig. 3: schematisch die Nutzung einer Anordnung von Lochkameras in drei verschiedenen Fällen mit unterschiedlichen Tiefenpositionen von erfassten Punkten einer Szene zur Erläuterung des Prinzips einer plenoptischen Kamera,
- Fig. 4: ein Blockdiagramm, das eine Anordnung mit einer Bewegungssteuerung zur Steuerung der Bewegung eines Sensors und ein Modell zur Auswertung der Sensordaten zeigt,
- Fig. 5: ein Ausführungsbeispiel einer Anordnung mit einer Erfassungseinrichtung und einer Begrenzungseinrichtung, die an einem gemeinsamen Träger angeordnet sind und somit gemeinsam bewegt werden können,
- Fig. 6: eine Draufsicht auf eine Anordnung bzw. ein Querschnitt einer Anordnung mit einer Mehrzahl von Erfassungseinrichtungen in einer vertikalen Ebene, wobei mehrere der Erfassungseinrichtungen Blickachsen haben, die nicht parallel zueinander verlaufen,
- Fig. 7: schematisch eine perspektivische Darstellung einer Anordnung mit einer Mehrzahl von Erfassungseinrichtung, deren Blickachsen parallel zueinander verlaufen, wobei jedoch mit mehreren der Erfassungseinrichtungen jeweils ein Spiegel kombiniert ist, der die Blickachse umgelenkt,
- Fig. 8: eine Ansicht eines Vegetationsbestandes und einer Anordnung von Erfassungseinrichtungen zu zwei verschiedenen Zeitpunkten,
- Fig. 9: eine Seitenansicht eines Vegetationsbestandes und eines Fahrzeugs mit einer Anordnung von Erfassungseinrichtungen,
- Fig. 10: eine Draufsicht auf das in Fig. 9 dargestellte Fahrzeug,
- Fig. 11: eine Frontansicht auf den Vegetationsbestand und das Fahrzeug, die in Fig. 9 dargestellt sind, und
- Fig. 12: ein Blockdiagramm zur Darstellung einer möglichen Konfiguration eines Systems.

Wie erwähnt zielt ein erstes Ausführungsbeispiel auf die Messung von Bestandsgrößen auf Lysimetern, ohne den Bestand zu beschädigen oder zu zerstören. Lysimeter sind Messeinrichtungen, die permanent hydrologische Messgrößen messen, insbesondere zur Entwicklung hydrologischer Modelle. Die Vegetation stellt eine wesentliche Einflussgröße hydrologischer Prozesse dar. In Kombination mit Lysimetern ist eine dreidimensionale Erfassung der Vegetation von Vorteil.

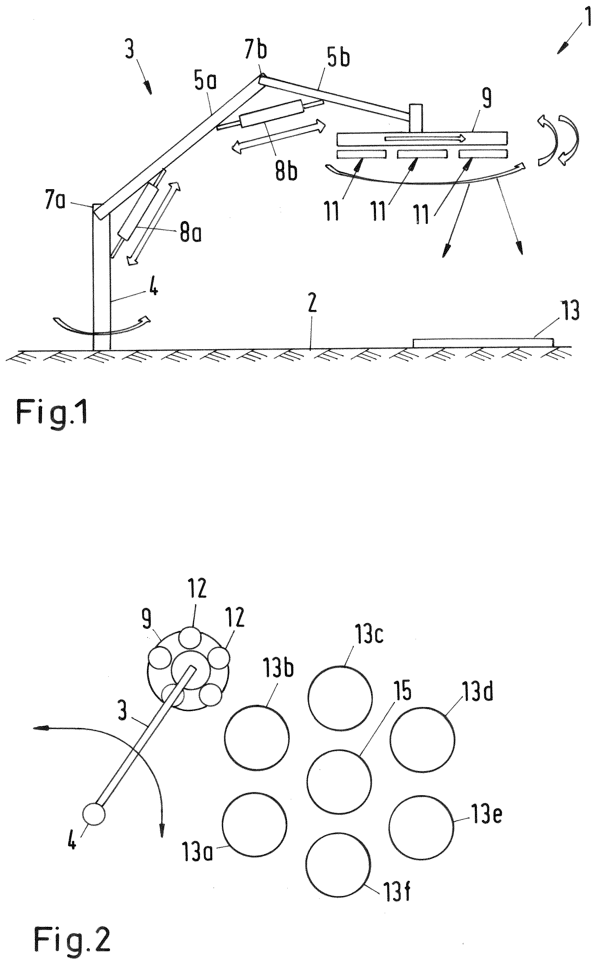

Die in Fig. 1 dargestellte Anordnung 1 zur Charakterisierung von Vegetation weist eine Geräteabstützung 3 auf, die über einen Ständer 4 auf dem Boden 2 abgestützt ist. Bei der konkret dargestellten und im Folgenden beschriebenen Ausführungsform der Geräteabstützung 3 handelt es sich lediglich um ein konkretes Ausführungsbeispiel. Andere Ausführungsformen, die auch eine Bewegung zumindest einer Erfassungseinrichtung zur Erfassung von Vegetation aufweisen, können mechanisch anders konstruiert sein. Bei der dargestellten Geräteabstützung 3 ist ein erster Arm 5a über ein erstes Gelenk 7a mit dem Ständer 4 verbunden. Ein zweiter Arm 5b ist über ein zweites Gelenk 7b mit dem ersten Arm 5a verbunden. Durch die Gelenke 7 ausführbare Drehbewegungen werden in dem Ausführungsbeispiel über eine erste Hydraulikeinrichtung 8a, die dem ersten Gelenk 7a zugeordnet ist, bzw. über eine zweite Hydraulikeinrichtung 8b, die dem zweiten Gelenk 7b zugeordnet ist, bewirkt.

Entsprechende hydraulische Stelleinrichtungen sind vorhanden, jedoch in Fig. 1 nicht dargestellt.

An dem freien Ende des zweiten Arms 5b ist ein Revolvergeräteträger 9 angeordnet, der beispielsweise angetrieben durch einen Elektromotor um eine vertikale Drehachse drehbar ist. An der Unterseite des Revolvergeräteträgers 9 ist zumindest eine Erfassungseinrichtung 11 zur Erfassung von Vegetation angeordnet. Im dargestellten Betriebszustand liegt, wie durch zwei schräg nach unten weisende Pfeile angedeutet ist, ein Lysimeterbehälter 13 im Erfassungsbereich einer der drei schematisch angedeuteten Erfassungseinrichtungen 11.

Durch die Beweglichkeit der Geräteabstützung 3 und durch die Drehbarkeit des Revolvergeräteträgers 9 können die Erfassungseinrichtungen 11 jeweils in eine Position zur Erfassung von Vegetation über verschiedenen Lysimeterbehältern gebracht werden. Der Revolvergeräteträger 9 kann wie in Fig. 1 durch einen Pfeil angedeutet aus Sicht des Geräteträgers vor und zurück bewegt werden. Insbesondere wenn der im Fall der Fig. 1 horizontal ausgerichtete Revolvergeräteträger 9 fest am freien Ende des zweiten Arms 5b angeordnet ist, oder wenn er über eine verstellbare Bewegungsmechanik mit dem freien Arm verbunden ist, kann der Revolvergeräteträger 9 auch diagonal und/oder senkrecht zum Boden 2 ausgerichtet werden. Dies ermöglicht eine Erfassung eines Bereichs der Vegetation aus einer Position seitlich des erfassten Bereichs.

Die Revolverdreheinrichtung des Revolvergeräteträgers 9 ermöglicht es, insbesondere jeweils eine der Erfassungseinrichtungen 11 in eine gewünschte Erfassungsposition zu bringen. Zum Beispiel kann die links unten an dem Revolvergeräteträger 9 dargestellte Erfassungseinrichtung 11 durch eine solche Drehung in die Position gebracht werden, in der sich momentan die rechts unten an dem Revolvergeräteträger 9 dargestellte Erfassungseinrichtung 11 befindet. Insbesondere können die Erfassungseinrichtungen 11 verschieden ausgestaltet sein, zum Beispiel hinsichtlich der Größe des Erfassungsbereichs und der spektralen Empfindlichkeit. Insbesondere ermöglicht die Revolverdreheinrichtung eine 360°-Rotationsbewegung. Drehzentrum ist in diesem Ausführungsbeispiel die Aufhängung der Revolverdreheinrichtung am freien Ende des zweiten Arms 5b.

Fig. 2 zeigt schematisch eine Ansicht von oben auf den Ständer 4, die Geräteabstützung 3, den Revolvergeräteträgern 9 mit fünf Haltern, von denen zwei mit dem Bezugszeichen 12 bezeichnet, und auf eine Anordnung mit sechs Lysimeterbehältern 13a bis 13f, in deren Mitte sich ein Versorgungsschacht 15 befindet. Der Revolvergeräteträger 9 kann durch Bewegung (insbesondere Drehung und Linearbewegung, sofern projiziert auf die Figurenebene der Fig. 2 betrachtet) der Geräteabstützung 3 zumindest über jedem der Lysimeterbehälter 13 positioniert werden.

Die Geräteabstützung 3 ist optional zusätzlich mit einer Fixiereinrichtung ausgerüstet, um verschiedene Erfassungseinrichtungen bzw. einzelne sehr große Erfassungseinrichtungen automatisch über jeweils zumindest einen der fünf Halter an den Revolvergeräteträgern 9 ankoppeln und von diesem abkoppeln zu können, insbesondere entsprechend einem Messprogramm. Vorzugsweise kann zum An- und Abkoppeln eine Magneteinrichtung des Halters verwendet werden, insbesondere um zu vermeiden, dass infolge von Verschmutzungen eine Ankopplung erschwert oder verhindert wird. Alternativ oder zusätzlich kann eine Klemmeinrichtung verwendet werden, mittels der die Erfassungseinrichtung durch Einwirken von Klemmkräften am Geräteträger gehalten wird. Zum Austausch von Erfassungseinrichtungen wird die Geräteabstützung 3 in oder an ein Magazin für die Erfassungseinrichtungen bewegt und die gewünschte Erfassungseinrichtung wird angekoppelt. Das Magazin kann insbesondere als Messgerätebox für eine wettergeschützte Lagerung der Erfassungseinrichtungen ausgestaltet sein.

Es ist bei einer optionalen Ausgestaltung vorgesehen, dass der Revolvergeräteträger 9 an das freie Ende des Arms 5b an- und abkoppelbar ist, beispielsweise wiederum mittels einer Magneteinrichtung und/oder einer Klemmeinrichtung. Dies ermöglicht es insbesondere, den Revolvergeräteträger gegen einen anderen Geräteträger auszutauschen.

An dem Geräteträger kann optional zumindest ein Sensor zur Erfassung der von der Sonne eingestrahlten elektromagnetischen Strahlung (insbesondere direkt und indirekt aus der Himmels-Hemisphäre und/oder direkt aus Richtung der Sonne) angeordnet werden/sein. Alternativ oder zusätzlich kann an dem Geräteträger zumindest ein Sensor zur Erfassung der atmosphärischen Gegenstrahlung vorgesehen sein/werden. Die Sensorsignale und/oder daraus abgeleitete Daten können bei der Bestimmung zumindest einer charakteristischen Größe der Vegetation verwendet werden.

Die an den Revolvergeräteträger montierte(n) Erfassungseinrichtungen(n), die vorzugsweise zumindest eine Lichtfeldkamera aufweist/en, wird/werden mittels einer Bewegungssteuerung und einer Bewegungseinrichtung zur Erfassung der Vegetation bewegt. Im Fall des in Fig. 1 dargestellten Ausführungsbeispiels findet die Bewegung wie erwähnt zumindest teilweise mittels einer Hydraulik ausgeführt. Alternativ oder zusätzlich kann zumindest ein Antriebsmotor vorgesehen sein, der die Bewegung bewirkt.

Gemäß einer Ausführungsform wird zumindest eine Erfassungseinrichtung, vorzugsweise in einer Rotationsbewegung, deren Rotationszentrum eine vertikale und durch den jeweiligen Lysimeterbehälter verlaufende Rotationsachse ist, um die Vegetation über dem Lysimeterbehälter herumgeführt. Während der Bewegung und/oder jeweils während eines Stopps erzeugt die Erfassungseinrichtung Bildinformation über den betrachteten Teil der Vegetation und werden entsprechende Bilddaten abgespeichert. Auf diese Weise wird die Vegetation aus verschiedenen Blickpositionen und bei unterschiedlicher Ausrichtung der Erfassungseinrichtung erfasst und werden Bilddaten aufgezeichnet. Vorzugsweise erfolgt dies auf verschiedenen Höhenniveaus. Zum Beispiel kann nach jeder 360°-Umdrehung die Höhe des Geräteträgers verändert werden, sodass für den Bestand auf dem Lysimeterbehälter auch aus Blickpositionen auf verschiedenen Höhenniveaus aufgenommene Bilddaten zur Verfügung stehen. Insbesondere kann auf diese Weise ein multitemporales Monitoring des Bestands auf dem Lysimeterbehälter erfolgen. Alternativ oder zusätzlich zu der Erfassung auf verschiedenen Höhenniveaus kann der Revolvergeräteträger 9 so verschwenkt werden, dass der Bestand nicht nur bei horizontal ausgerichteter Blickachse der Erfassungseinrichtung erfasst wird, sondern auch bei zumindest einer Blickachse, die in Richtung Boden geneigt verläuft oder in Richtung Himmel geneigt verläuft oder senkrecht auf den Boden oder in den Himmel ausgerichtet ist. Insbesondere kann die Erfassungseinrichtung derart verschwenkt werden, dass die Blickachse um 180 Grad vom Himmel zum Boden oder umgekehrt gedreht wird, wobei diese Schwenkbewegung optional überlagert mit einer Linearbewegung oder der genannten Rotationsbewegung des Geräteträgers ist. Jeweils kann der Bestand wiederum während der Bewegung und/oder während Stopps der Bewegung erfasst werden und Bildinformation erzeugt werden.

Anstelle des in Fig. 1 dargestellten Revolvergeräteträgers 9 kann auch ein anderer Geräteträger gewendet werden, der im Unterschied zu dem Revolvergeräteträger 9 zum Beispiel keine Drehachse für die Bewegung einer einzigen Erfassungseinrichtung oder mehrerer Erfassungseinrichtungen um eine Drehachse am Ende eines Arms der Geräteabstützung 3 aufweist, auch wenn dies nicht in den Schutzumfang der Ansprüche fällt.

Die Erfassungseinrichtung wird wie in dem zuvor beschriebenen Ausführungsbeispiel vorzugsweise um den beobachteten Bereich der Vegetation herumbewegt und es wird dabei unter verschiedenen Blickachsen Bildinformation erzeugt. In jedem Fall wird für die Bewegung der Erfassungseinrichtung eine gewisse Zeit t benötigt. Bereits minimale Luftbewegungen während des Messvorgangs können bei den Aufnahmen aus verschiedenen Blickrichtungen (d. h. mit verschiedenen Blickachsen) zu Dekorrelationen führen. Daher ist für die bevorzugte Ausführungsvariante eine Windschutzhaube vorgesehen, die insbesondere nicht die Beleuchtungsbedingungen während der Erfassung der Vegetation beeinflussen sollte. Alternativ oder zusätzlich kann eine künstliche Beleuchtung mit vorzugsweise einem sonnenähnlichen Strahlungsspektrum verwendet werden bzw. vorgesehen sein. In diesem Fall kann eine Windschutzhaube verwendet werden, die Licht aus der Umgebung nahezu vollständig oder vollständig abschirmt.

Die einzelnen Bewegungen sowie die Datenaufzeichnung werden durch eine Bewegungssteuerung gesteuert. Vorzugsweise kann die Bewegungssteuerung programmiert werden und daher ein vorgegebenes Bewegungsprotokoll automatisch abgearbeitet werden. Sollte es zu Havarie-Situationen während des Messvorgangs kommen, kann die Datenaufzeichnung zurückgesetzt und neu gestartet werden. Tritt das Problem wiederholt auf, erfolgt eine automatische Benachrichtigung einer Zentrale, um eine Havarie-Behebung auszulösen.

Da die Optik und die Mechanismen der Bilderfassung komplex sind, werden die folgenden Vereinfachungen zur verständlichen Erläuterung eingeführt: Der Objektraum wird zu einer zweidimensionalen Szene vereinfacht, in der Licht als Einzelwert definiert ist und sich geradlinig ausbreitet. Wenn man zunächst vereinfachend davon ausgeht, dass eine als Kamera ausgeführte Erfassungseinrichtung wie eine Lochkamera funktioniert, dann würde jedes Objekt, das vor dieser Kamera platziert wird, ein Realbild erzeugen, das sich in der Konvergenzebene befindet. Es sei darauf hingewiesen, dass diese Realbildprojektion keine brauchbaren Tiefeninformationen über die Szene liefert, es sei denn, es wird eine zweite Kamera (z. B. wieder eine Lochkamera) hinzugefügt. Basierend auf Bildern zweier Kameras ist es möglich, weitere Informationen über die Struktur und die Tiefe der Szene zu gewinnen. Anstatt zwei oder mehr einzelne Kameras zu verwenden, um die Anzahl der Blickwinkel zu erhöhen, ist es auch möglich, die Kamera zu bewegen.

Wird eine optische Linse am Kameraloch platziert, wird die auftreffende Strahlung von unendlich vielen Aussichtspunkten in der Linsenebene beobachtet. Die verschiedenen Blickwinkel beziehen sich auf die verschiedenen Bilder, die durch unterschiedliche Positionen in der Objektivblendenebene sichtbar wären. Bei vielen Erfassungssystemen wird das Licht in der Sensorebene als räumlich gemitteltes Signal ohne Erfassung seiner Richtung oder Herkunft erfasst. Mit anderen Worten, das von jedem Punkt der Blendenebene einfallende Licht beinhaltet mehr optische Informationen als das auf die Bildebene projizierte gemittelte Signal. Die Gesamtheit dieser optischen Informationen (Intensität, Richtung und optional auch Wellenlänge oder Frequenz) werden zusammengefasst als plenoptisch bezeichnet. Um diese optischen Informationen zu erfassen, kann eine einfache Annahme getroffen werden. Je nach Abstand des Objektes verschiebt sich die Bildebene des Systems bzw. vergrößert oder verkleinert sich, in der die Abbildung scharf ist. Um zu unterscheiden, ob das Objekt nahe oder weit von der Kamera (bzw. der Fokusebene) entfernt ist, wird davon ausgegangen, dass die Kamera eine nicht zentrische Öffnung aufweist. Dann würde das Objekt nur noch auf einer Seite der Bildebene erscheinen, da die Lichtstrahlen durch die Linse hindurchtreten. Abhängig von der gewählten Blende sowie vom Abstand zur Kamera erscheint das Objekt entweder auf der linken oder rechten Seite der optischen Achse, während die Verschiebung zwischen der Objektprojektion und der optischen Achse von der gewählten Blende abhängig ist. Mit diesem Wissen lässt sich die Tiefenposition des jeweils scharf abgebildeten Punkts der Szene aus der bekannten Verschiebung der Blende in der Linsenebene und dem Abstand von der optischen Achse in der Bildebene ableiten.

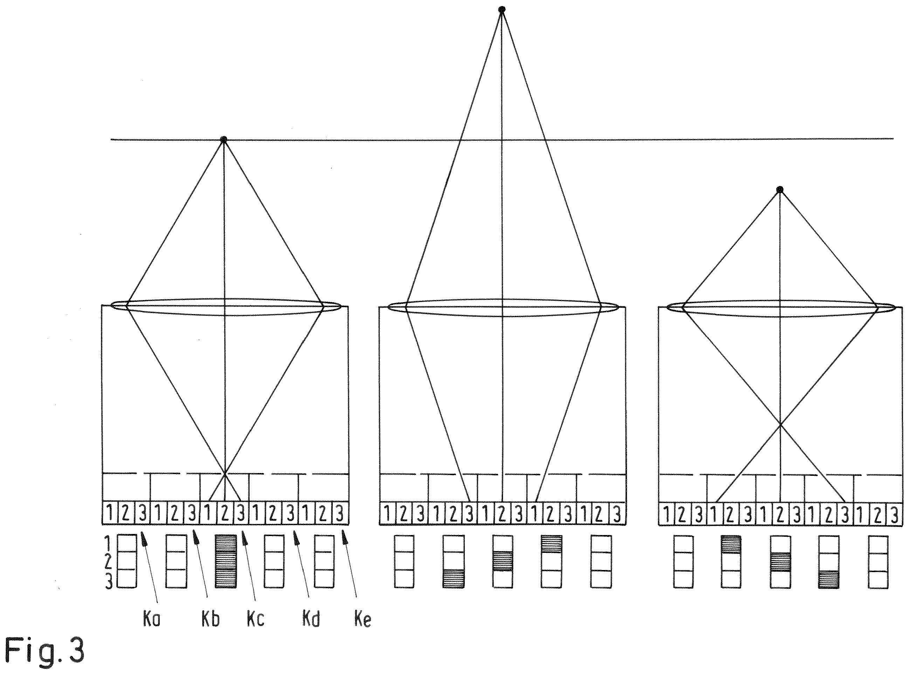

Diese Ableitung kann durch die Trennung der Fläche der Sensorebene in eine Anordnung von Subsystemen erreicht werden, zum Beispiel durch ein Lochkameraarray. Nun erfasst jede Lochkamera Licht aus einer bestimmten Richtung bzw. aus einer bestimmten Position in der Öffnungsebene des Objektivs. Da eine Lochkamera das einfallende Licht immer in Form eines realen Bildes aufnimmt, kann die Strahlung, die nun auf die Sensorebene trifft, nach ihrer Richtung und Intensität beschrieben werden. Fig. 3 zeigt den prinzipiellen Aufbau einer solchen vereinfachten plenoptischen Kamera und das Prinzip der Lichtfelderfassung für drei verschiedene Tiefenpositionen in der Szene, unter der Annahme, dass jede Kamera in der dargestellten horizontalen Richtung der Figurenebene der Fig. 3 drei Sensorelemente (bezeichnet als 1, 2 und 3) aufweist und daher mit einer entsprechenden Auflösung detektieren kann, aus welcher Richtung in das Loch der Lochkamera einfallenden Strahlung einfällt. Fig. 3 zeigt daher für jeden der drei Fälle verschiedener Tiefenposition schematisch eine Anordnung mit fünf Lochkameras Ka, Kb, Kc, Kd, Ke, die eine horizontale Auflösung von drei haben.

Im ersten Fall (mittlere Tiefenposition des scharf abgebildeten Bereichs der Szene) befindet sich der Objektpunkt in der Fokusebene der Hauptlinse, welche durch eine horizontale Linie in Fig. 3 dargestellt ist. Infolgedessen wird das resultierende Bild vollständig in den mittleren Bereich der Bildebene der fünf Lochkameras K projiziert, im Ausführungsbeispiel vollständig auf die drei Sensorelemente 1, 2, 3 der mittleren Lochkamera Kc. Wenn der abgebildete Bereich der Szene entweder weiter entfernt von den Kameras oder näher an den Kameras als die Fokusebene der Hauptlinse platziert ist, wird die Strahlung dagegen auf die Sensorelemente mehrerer Lochkameras K, im Ausführungsbeispiel drei Lochkameras Kb, Kc, Kd, verteilt abgebildet. Die jeweilige Kombination der Sensorelemente der verschiedenen Lochkameras, die Strahlung von demselben Punkt der Szene empfängt, ist charakteristisch für die Tiefenposition. In dem dargestellten Ausführungsbeispiel liegt der abgebildete Punkt der Szene in allen drei Fällen auf der optischen Achse der einzigen Linse. Daher trifft der entlang der optischen Achse einfallende Teil der Strahlung immer auf das Sensorelement 2 der mittleren Lochkamera Kc. Wenn der abgebildete Punkt nicht auf der optischen Achse liegt, fällt die durch die Mitte der Linse einfallende Strahlung auf ein anderes Sensorelement der Anordnung von Lochkameras K. Daher ist die Kombination der Sensorelemente der verschiedenen Lochkameras, die Strahlung von demselben Punkt der Szene empfängt, auch abhängig von dem Abstand des abgebildeten Punktes von der optischen Achse. Unter Nutzung der Mehrzahl der Lochkameras K und durch Berücksichtigung der unterschiedlichen Lochpositionen relativ zu den Sensorelementen der jeweiligen Lochkamera K kann somit zum Beispiel die Richtung der von den scharf abgebildeten Punkten der Szene ausgehenden und am Ort der optischen Achse der Linsenmitte hindurchtretenden Strahlung ermittelt werden. Zusätzlich ist für die scharf abgebildeten Punkte der Szene jeweils Information über die Tiefenposition innerhalb eines dreidimensionalen Raumes in der gewonnenen Bildinformation enthalten. Daraus lässt sich unmittelbar eine Punktwolke in dem dreidimensionalen Raum ermitteln, die den scharf abgebildeten Punkten entspricht

In der Praxis kann nicht nur eine einzige Linse verwendet werden, sondern eine komplexe Linsenoptik zum Beispiel ein Linsenarray aus insbesondere nebeneinander und hintereinander angeordneten Mikrolinsen. Je nach Güte der Mikrolinsenarrays und der verwendeten Kameras kann ein dreidimensionaler Raum im Rahmen der technischen Möglichkeiten mit einer beliebigen Anzahl von Tiefenstufen erfasst werden. Die Tiefenstufen entsprechen einer Auflösung des Raumes in Tiefenrichtung.

Für eine dreidimensionale Rekonstruktion von Objekten kann daher insbesondere Entfernungsinformation und Richtungsinformation benutzt werden. Dies kann über den Einsatz von refokussierten Bildern (die der Zentralperspektive unterliegen), welche aus den Rohdaten der Lichtfeldkamera bestimmt werden, erfolgen. In Kenntnis der inneren Orientierung ist es möglich, durch Kombination mit den Entfernungsinformationen aus einer Kalibrierung mittels Tiefenkarte für jedes Pixel der Lichtfeldkamera die in Fig. 3 illustrierten Bildstrahlen zu definieren. Wird dies für jedes Pixel durchgeführt, können nun für jeden der korrespondierenden Objektpunkt die Objektkoordinaten bestimmt werden, wodurch eine Punktwolke der scharfen Bildpunkte des Objektes generiert wird.

Unter Einsatz eines Modells kann aus den Daten eine Information zur Vegetationsstruktur abgeleitet werden, z.B. Bestandshöhe, Bestandsdichte, Blattfläche, Blattflächenindex und/oder Bestandsarchitektur. Diese können aus der dreidimensionalen Punktwolke der scharfen Bildpunkte bestimmt werden, indem mit Hilfe von diversen 3D-Renderingverfahren kontinuierliche Oberflächen aus der Punktwolke abgeleitet werden.

In einer weiteren Verarbeitungsstufe können verdeckte Vegetationsteile im erfassten Raum rekonstruiert werden. Die Unsicherheiten werden bei solch einer Rekonstruktion mit zunehmender Entfernung von der Kamera zunehmen, da Objekte mit größer werdender Entfernung von der Kamera zunehmend durch Vegetationsteile verdeckt werden. Daher wird zur Rekonstruktion vorzugsweise eine Modellpflanze (künstliche Repräsentation einer Ackerpflanze) vorgegeben, um die Interpolationsroutinen in einem plausiblen Arbeitszustand zu halten.

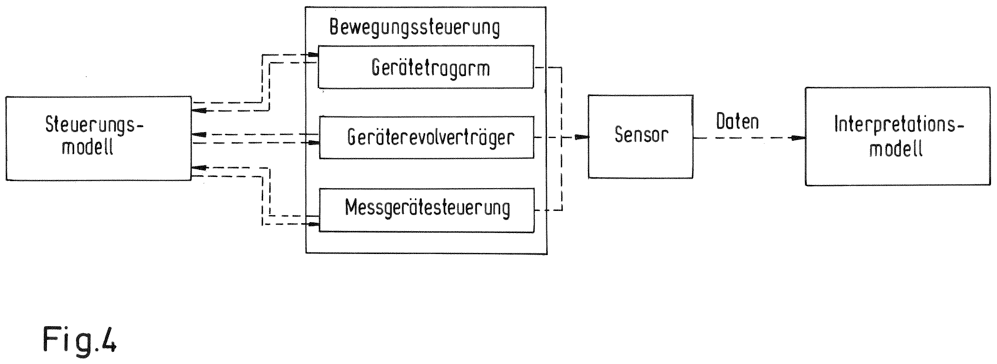

Um den erfassten räumlichen Bereich der Vegetation zu rekonstruieren, kann insbesondere zumindest eine insbesondere hochauflösende Lichtfeld-Kamera, in einer wie in Fig. 4 dargestellten Anordnung verwendet werden. Eine Bewegungssteuerung steuert die Bewegung des Sensors, im Ausführungsbeispiel durch Steuerung der Bewegung der Geräteabstützung (hier: des Gerätetragearms, im Fall der Fig. 1 der Arme 5a, 5b) und des Geräterevolverträgers bzw. Revolvergeräteträger (im Fall der Fig. 1 des Revolvergeräteträgers 9). In dem dargestellten Ausführungsbeispiel steuert die Bewegungssteuerung auch den Betrieb der Messgeräte, d. h. der Erfassungseinrichtungen und der optional zusätzlich vorhandenen Sensoren. Die Bewegungssteuerung und Steuerung der Messgeräte erfolgt gemäß einem Steuerungsmodell, wie links in Fig. 4 auch mittels in beide Richtungen weisender gestrichelter Pfeile dargestellt ist. Rechts von dem Block der Bewegungssteuerung ist durch einen gestrichelten Pfeil angedeutet, dass sich die Bewegungssteuerung und die Steuerung der Messgeräte auf den Sensor auswirkt, wobei unter dem Begriff des Sensors wiederum die Messgeräte bzw. Erfassungseinrichtungen und optional zusätzlich vorhandenen Sensoren zu verstehen sind. Die von dem Sensor bzw. den Sensoren erzeugten Daten werden in dem Ausführungsbeispiel gemäß einem Interpretationsmodell ausgewertet und dabei vorzugsweise zumindest eine die erfasste Vegetation charakterisierende Größe ermittelt.

Um die Erfassung des zu erfassenden räumlichen Bereichs der Vegetation durch die zumindest eine Erfassungseinrichtung auf diesen räumlichen Bereich zu beschränken, kann auf der der Erfassungseinrichtung gegenüberliegenden Seite des räumlichen Bereichs eine Begrenzungseinrichtung angeordnet sein/werden, die den räumlichen Bereich auf dieser gegenüberliegenden Seite begrenzt und eine entsprechende Begrenzungsoberfläche aufweist. Die Begrenzungsoberfläche kann zum Beispiel durch eine oder mehrere Platten gebildet sein. Vorzugsweise hat die Begrenzungsoberfläche eine Farbe, die in dem zu erfassenden räumlichen Bereich der Vegetation ansonsten nicht vorkommt. Dies ermöglicht es insbesondere bei Verwendung des oben erwähnten Interpretationsmodells, die Begrenzungsoberfläche als nicht zum Bestand bzw. zur beobachteten Vegetation oder ihrer natürlichen Umgebung gehörend zu identifizieren.

Es wird daher vorgeschlagen, dass die Erfassungseinrichtung und eine Begrenzungseinrichtung zur Begrenzung eines zu erfassenden räumlichen Bereichs der Vegetation in einem Abstand zueinander angeordnet sind/werden, wobei die Erfassungseinrichtung auf eine Oberfläche der Begrenzungseinrichtung ausgerichtet ist/wird, sodass zwischen der Erfassungseinrichtung und der Begrenzungseinrichtung angeordnete Vegetation von der Erfassungseinrichtung erfassbar ist bzw. erfasst wird.

Insbesondere kann die Bewegungseinrichtung ausgestaltet sein, die Erfassungseinrichtung und die Begrenzungseinrichtung derart gemeinsam relativ zu der Vegetation zu bewegen, dass nacheinander verschiedene räumliche Bereiche der Vegetation von der Erfassungseinrichtung erfassbar sind. Bei einer entsprechenden Ausgestaltung des Verfahrens werden die Erfassungseinrichtung und die Begrenzungseinrichtung derart gemeinsam relativ zu der Vegetation bewegt, dass nacheinander verschiedene räumliche Bereiche der Vegetation von der Erfassungseinrichtung erfasst werden. Dies ermöglicht es auf einfache Weise, verschiedene definierte räumliche Bereiche der Vegetation zu erfassen. Insbesondere können die Erfassungseinrichtung und die Begrenzungseinrichtung mechanisch miteinander verbunden sein und kann die Bewegungseinrichtung die Erfassungseinrichtung und die Begrenzungseinrichtung aufgrund der mechanischen Verbindung gemeinsam bewegen.

Bei einer ersten Ausführungsform werden die Erfassungseinrichtung und die Begrenzungseinrichtung um einen zu erfassenden räumlichen Bereich der Vegetation herumbewegt, insbesondere durch Drehung um eine durch den räumlichen Bereich hindurch verlaufende Drehachse. Dies ermöglicht es der Erfassungseinrichtung von verschiedenen Seiten diesen räumlichen Bereich der Vegetation zu erfassen, wobei die Grenze des räumlichen Bereichs durch die Begrenzungseinrichtung definiert ist. Bei einer zweiten Ausführungsform werden die Erfassungseinrichtung und die Begrenzungseinrichtung derart bewegt, dass der zwischen der Erfassungseinrichtung und der Begrenzungseinrichtung liegende räumliche Bereich fortlaufend verändert wird. Der dazwischen liegende räumliche Bereich definiert in jedem Zeitpunkt den von der Erfassungseinrichtung erfassbaren Bereich. Dies kann beispielsweise durch eine geradlinige Bewegung erreicht werden. Alternativ kann einer geradlinigen Bewegung eine Drehbewegung überlagert sein. In beiden Fällen verändert sich der räumliche Bereich dadurch, dass auf zumindest einer Seite des zwischen der Erfassungseinrichtung und der Begrenzungseinrichtung liegenden Bereichs Vegetation in den dazwischen liegenden Bereich eintritt bzw. eintreten kann und auf zumindest einer Seite Vegetation aus dem dazwischen liegenden Bereich austritt bzw. austreten kann.

Insbesondere kann von einer Kamera aus gesehen, die als Erfassungseinrichtung verwendet wird, auf der gegenüberliegenden Seite eines zu erfassenden räumlichen Bereichs der Vegetation, der sich in einem Lysimeterbehälter befindet, eine gewölbte Platte angeordnet sein. Die Wölbung ist vorzugsweise der Wölbung des Lysimeterbehälters angeglichen. Auf diese Weise kann erreicht werden, dass ausschließlich der Vegetationsbestand, der sich unmittelbar auf dem Lysimeter befindet, erfasst wird. Zum Beispiel hat die gewölbte Platte in dem gängigen Fall eines zylindrischen Lysimeterbehälters die Form eines Segments einer Zylinderwand, wobei die Radien der Außenwand des Lysimeterbehälters und der Innenoberfläche der gewölbte Platte gleich groß oder annähernd gleich groß sind.

Ein zweites Ausführungsbeispiel der Erfindung betrifft die Vermessung von Vegetationsbeständen, wobei zumindest eine Erfassungseinrichtung nacheinander verschiedene räumliche Bereiche der Vegetation erfasst, und zum Beispiel eine linienförmige Tomographie durchführt. Hierdurch und/oder durch Verarbeitung der erfassten Informationen wird die dreidimensionale Bildinformation ermittelt, die wiederum zur quantitativen Beschreibung der Vegetation verwendet werden kann, beispielsweise durch Ermittlung zumindest eines Wertes einer die Vegetation charakterisierenden Größe.

Vorzugsweise wird zur Erstellung der linienförmigen Tomographien zumindest eine plenoptische Kamera (im Folgenden auch als Sensor bezeichnet) so angeordnet, dass diese die Vegetation entlang verschiedener Blickachsen erfasst. Insbesondere können, zum Beispiel wie oben an einem vereinfachten Ausführungsbeispiel bereits beschrieben wurde, Punktwolken aus der von einer Mehrzahl der Sensoren und/oder von demselben Sensor nacheinander erfassten Bildinformation ermittelt werden. Dabei kann jeweils separat entlang paralleler Blickachsen und/oder einander kreuzender und/oder windschiefer Blickachsen gewonnene Bildinformation, die im Fall plenoptischer Kameras bereits selbst dreidimensionale Bildinformation ist, zu einer einzigen Punktwolke kombiniert werden.

Nachfolgend werden drei weitere Ausführungsbeispiele, die insbesondere auch Varianten der bereits erläuterten Ausführungsbeispiele sein können, näher erläutert:
- Anordnung mit einem Sensor in einer Sensorebene
- Anordnung mit mehreren Sensoren in einer Sensorebene
- Anordnung mit einem Sensor und/oder mehreren Sensoren in mehreren Sensorebenen

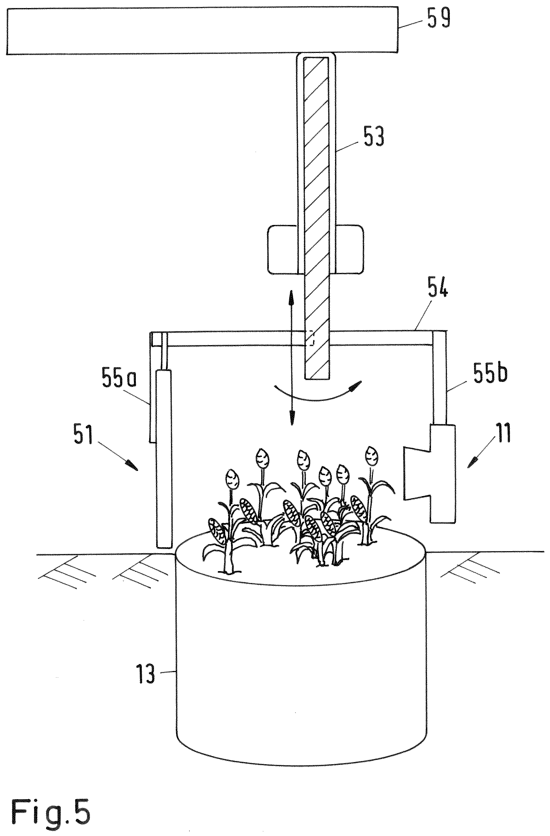

Unter Bezugnahme auf Fig. 5 wird eine Variante des bereits beschriebenen ersten Ausführungsbeispiels für die Erfassung von Vegetation auf einem Lysimeterbehälter beschrieben. Bei diesem Ausführungsbeispiel verläuft die Blickachse der Erfassungseinrichtung 11 (des Sensors) in horizontaler Richtung oder weicht geringfügig davon ab. Die Erfassungseinrichtung 11 wird von einem Träger 53 getragen, dessen Längsachse sich in vertikaler Richtung erstreckt. Das obere Ende des Trägers 53 ist an einem Geräteträger 59 befestigt, bei dem es sich erfindungsgemäß um einen Revolvergeräteträger handelt, bei dem es sich zum Beispiel um den Revolvergeräteträger 9 aus Fig. 1 handeln kann. In diesem Fall ist die Ausrichtung der Erfassungseinrichtung 11 gegenüber dem Ausführungsbeispiel aus Fig. 1 um 90° gedreht.

Außerdem wird eine Begrenzungseinrichtung 51 verwendet, um den zu erfassenden räumlichen Bereich gegen andere Bereiche abzugrenzen. Die Begrenzungseinrichtung 51 begrenzt den zu erfassenden räumlichen Bereich auf der der Erfassungseinrichtung 11 gegenüberliegenden Seite. Dabei wird die Begrenzungseinrichtung 51 von demselben Träger 53 wie die Erfassungseinrichtung 11 getragen. Im unteren Bereich gabelt sich die Begrenzungseinrichtung 51 zu diesem Zweck auf. Eine Forke 55b der Gabel 54 trägt die Erfassungseinrichtung 11, die andere Forke 55a der Gabel 54 die Begrenzungseinrichtung 51.

Durch Drehung der Erfassungseinrichtung 11 und der Begrenzungseinrichtung 51 um eine durch den erfassten räumlichen Bereich der Vegetation verlaufende Drehachse, die in dem Ausführungsbeispiel in vertikaler Richtung oder annähernd in vertikaler Richtung verläuft, werden Aufnahmen des Bestands aus unterschiedlichen Blickwinkeln erzeugt. Optional kann der Drehbewegung eine geradlinige Bewegung überlagert sein.

Optional kann der Abstand zwischen der Erfassungseinrichtung und der Begrenzungseinrichtung durch eine Stelleinrichtung variiert werden. Zum Beispiel in dem Fall der Fig. 5 kann die Stelleinrichtung in und/oder an dem in horizontaler Richtung verlaufenden Teil der Gabel 54 angeordnet sein und diesen Teil der Gabel 54 verlängern oder verkürzen.

Alternativ oder zusätzlich kann die Höhe der Erfassungseinrichtung und der Begrenzungseinrichtung über dem Boden eingestellt werden oder verändert werden, um Vegetation in verschiedenen Höhenpositionen bezüglich des Bodens durch die Erfassungseinrichtung zu erfassen. Hierdurch kann unmittelbar tomografische Information gewonnen werden.

In jedem Fall kann durch Erfassung der Vegetation aus einer Mehrzahl von Blickpositionen bzw. in verschiedenen Blickachsen und/oder in verschiedenen Höhenpositionen insgesamt Bildinformation über die Vegetation gewonnen werden, aus der in der Art einer insbesondere computergestützten Rekonstruktion dreidimensionale Bildinformation über die erfasste Vegetation erzeugt wird. Daraus lässt sich wie bereits erwähnt zumindest ein Wert zumindest einer die Vegetation charakterisierenden Größe ermitteln.

Ein weiteres Ausführungsbeispiel der Erfindung, das bereits kurz erwähnt wurde, weist eine Mehrzahl der Sensoren bzw. Erfassungseinrichtung ihn auf, die gemeinsam bewegt werden, um nacheinander oder fortlaufend verschiedene räumliche Bereiche der Vegetation zu erfassen, wobei zu einem gegebenen Zeitpunkt die Vegetation gleichzeitig oder unmittelbar nacheinander von der Mehrzahl der Erfassungseinrichtungen erfassbar ist und vorzugsweise auch erfasst wird.

Insbesondere kann die entsprechende Bewegungseinrichtung Teil eines Fahrzeugs sein, insbesondere eines ferngesteuerten oder autonom fahrenden Fahrzeugs. Alternativ kann die Bewegungseinrichtung an ein Fahrzeug angekoppelt sein, zum Beispiel als Anhänger. Unter einer Bewegungseinrichtung wird jegliche Einrichtung verstanden, die eine Relativbewegung der (bezogen auf den allgemeinen Erfindungsgedanken) zumindest einen Erfassungseinrichtung relativ zur Vegetation ermöglicht bzw. bewirkt. Die Bewegungseinrichtung kann daher selbst eine Antriebseinrichtung zur Erzeugung der Bewegung aufweisen und/oder mittels einer separaten Antriebseinrichtung bewegt werden.

Insbesondere für eine linienförmige Bewegung der Anordnung zur Erfassung sich (zumindest hinsichtlich ihrer Position) verändernder räumlicher Bereiche der Vegetation kann die Anordnung zum Beispiel als Teil eines Fahrzeugs über befestigten Untergrund (z.B. Straßen, Wegen, Schienen) und/oder unbefestigtem Untergrund (z.B. Wiesen, Wälder) bewegt werden. Optional kann durch eine Hydraulik oder pneumatische die Höhe der zumindest einen Erfassungseinrichtung über dem Untergrund eingestellt und/oder verändert werden. Somit ist auch eine Adaption an die jeweiligen Umweltgegebenheiten während der Erfassung der Vegetation möglich.

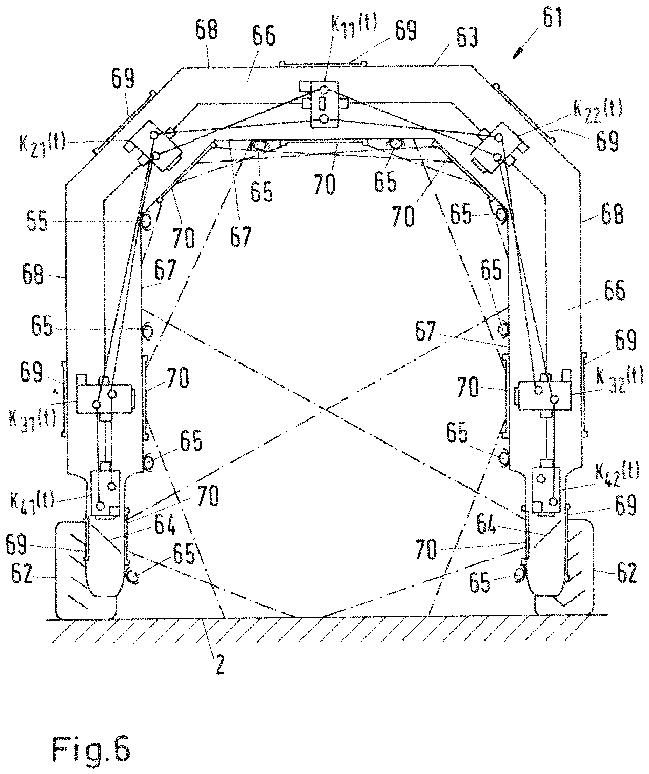

Insbesondere kann die Anordnung so ausgeführt sein, dass sich mehrere Erfassungseinrichtungen in einer Ebene befinden, wobei vorzugsweise nicht alle Blickachsen dieser Erfassungseinrichtungen parallel sind, wodurch eine zeitgleiche Aufnahme des Bestands aus unterschiedlichen Blickwinkeln ermöglicht wird. Ein entsprechendes Ausführungsbeispiel wird nun anhand von Fig. 6 beschrieben.

Das in Fig. 6 dargestellte Fahrzeug 61 fährt auf insbesondere bereiften Rädern 62 und weist einen Rahmenträger 63 auf, d. h. einen rahmenförmigen Träger. Der Rahmenträger 63 trägt eine Mehrzahl von (in dem Ausführungsbeispiel sieben) Erfassungseinrichtungen K, die zum Beispiel alle plenoptische Kameras sind. Zwei K31, K32 der Erfassungseinrichtungen haben horizontal verlaufende Blickachsen und sind aufeinander ausgerichtet. Eine K11 der Erfassungseinrichtungen ist auf den Boden gerichtet, hat eine vertikal verlaufende Blickachse und befindet sich oben an dem Rahmenträger 63, nämlich an einem Querbalken oder einem Dach des Rahmenträgers 63. Zwei der Erfassungseinrichtungen K41, K42 sind zwar auf den Boden gerichtet, haben aber etwa horizontal ausgerichtete Blickachsen, da sie den Raum zwischen den Rädern und im unteren Teil des Rahmenträger-Innenraumes über jeweils einen Spiegel 64 erfassen. Die Erfassungseinrichtungen K41, K42 befinden sich geringfügig oberhalb der Räder 62 und somit in geringem Abstand zum Boden. Die Erfassungseinrichtungen K41, K42 können alternativ auf Höhe der Räder 62 angeordnet sein. Sie dienen in jedem Fall der Erfassung eines unteren Bereichs innerhalb der Umrisse des Rahmenträgers 63. Ferner haben zwei Erfassungseinrichtungen K21, K22 schräg, zum Beispiel unter einem Winkel von 45 Grad gegen die Vertikale, verlaufende Blickachsen und sind somit schräg auf den Boden ausgerichtet.

Die Anzahl der Erfassungseinrichtungen, welche an dem Rahmenträger angeordnet sind, und ihre Blickrichtungen können bei anderen Ausgestaltungen anders gewählt bzw. eingestellt sein. Bevorzugt wird insbesondere, dass sich zumindest zwei der Erfassungseinrichtungen bei horizontaler Ausrichtung der Blickachsen gegenüberliegen, zumindest eine der Erfassungseinrichtungen den von ihr erfassten Bereich über einen Spiegel erfasst, zumindest eine Erfassungseinrichtung oben am Rahmenträger befestigt und auf den Boden ausgerichtet ist, sich die Erfassungsbereiche von zumindest jeweils zwei der Erfassungseinrichtungen überlappen und/oder in Fahrtrichtung des Fahrzeugs mehrere Sätze von Erfassungseinrichtungen hintereinander angeordnet sind. Insbesondere können die Ausrichtungen der Spiegel 64 oder des zumindest einen Spiegels eingestellt werden, sodass die Richtung der resultierenden Blickachse der zugeordneten Erfassungseinrichtung einstellbar ist. Dadurch verändert sich auch der von der Erfassungseinrichtung erfasste Bereich.

Die Darstellung in Fig. 6 kann als Schnittdarstellung verstanden werden, d. h. das Fahrzeug 61 erstreckt sich senkrecht zur Figurenebene der Fig. 6 und es kann zum Beispiel in einer Ebene hinter oder vor der Figurenebene eine weitere vertikale Ebene der Anordnung vorhanden sein, in der sich eine Mehrzahl von Erfassungseinrichtung in befindet. Diese können zum Beispiel in gleicher Weise wie in Fig. 6 dargestellt angeordnet und ausgerichtet sein.

Optional kann der Rahmenträger 63 und/oder können die Erfassungseinrichtungen K mit einer Dämpfungseinrichtung ausgestattet sein, welche die Übertragung von Erschütterungen und Schwingungen dämpft oder verhindert. Alternativ oder zusätzlich können die Erfassungseinrichtungen K über eine stabilisierende Aufhängung, wie zum Beispiel einen Gimbal an dem Rahmenträger 63 befestigt sein. Dennoch stattfindende Eigenbewegungen der Erfassungseinrichtung und/oder optional verwendeter Spiegel können zum Beispiel an jeder Erfassungseinrichtung K bzw. an jedem Spiegel mittels eines entsprechenden Messgeräts, vorzugsweise einem Gyroskop, detektiert werden. Dies ermöglicht es, zum Beispiel lediglich Erfassungsinformationen der Erfassungseinrichtung K zu verwenden, die bei Freiheit von Erschütterungen oder lediglich bei geringfügigen Erschütterungen entstanden sind. Die aufgezeichneten Eigenbewegungsdaten können über eine Kommunikationseinheit an eine Kontroll- und Prozessierungseinheit übertragen werden. Alternativ oder zusätzlich kann die relative Lage der Sensoren und/oder der Spiegel zueinander vorzugsweise über Laserpulse detektiert werden, die zwischen den Erfassungseinrichtungen und/oder Spiegeln übertragen werden und durch Detektorfelder an deren Oberflächen (insbesondere zeitlich parallel zu den Sensormessungen) empfangen werden. Für jedes Detektorfeld ist vor Beginn der Sensormessungen bekannt, an welcher Stelle der Laserpuls auftreffen muss, wenn sich die Sensoren im Ruhezustand befinden (z.B. vorzugsweise durch eine Lasermessung der Anordnung im Ruhezustand). Während der Messung auftretende Lageabweichungen der Sensoren zueinander, können somit auf Basis der Vektoren beschrieben werden, die zwischen den Auftreffpunkten im Ruhezustand zu den jeweiligen während des Betriebs der Anordnung gemessenen Auftreffpunkten aufgespannt werden. Laserstrahlen sind in Fig. 6 als gerade Linien zwischen benachbarten Erfassungseinrichtungen K angedeutet.

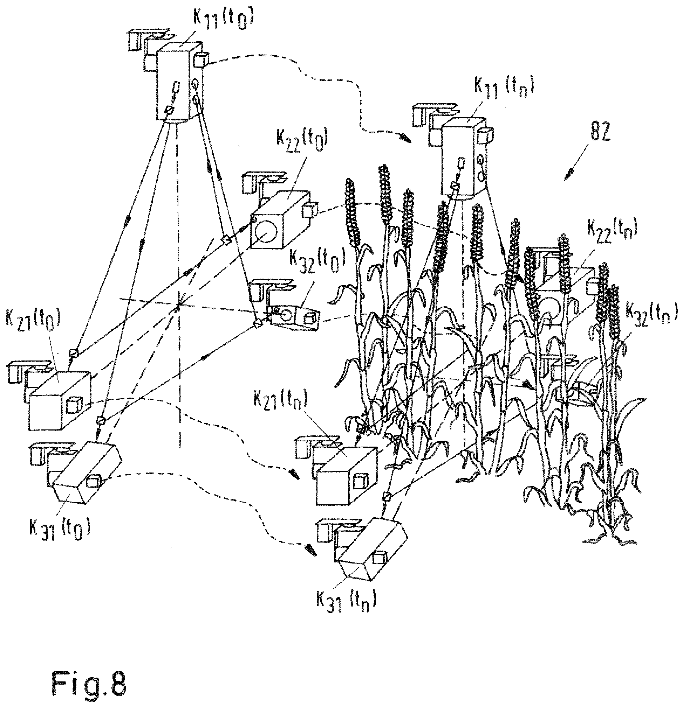

Insbesondere kann der Rahmenträger 63 nicht nur bei dem in Fig. 6 dargestellten Ausführungsbeispiel mit den daran angeordneten Erfassungseinrichtungen K in ein nach unten offenes Gehäuse 66 integriert sein, das Umwelteinflüsse wie Wind mindert oder eliminiert. In einer bevorzugten Ausführungsvariante sind zudem am Ein- und Ausgang des Gehäuses (in Fig. 6 vor und hinter der Figurenebene liegende Öffnungen des Gehäuses 66) lichtdurchlässige und/oder lichtundurchlässige Abschirmungen (In Fig. 6 nicht dargestellt) angebracht. Deren Höhe über dem Bestand wird vorzugsweise auf der Basis der Messwerte eines optischen Höhenmesssystems angepasst, um den Einfluss von Wind so gering wie möglich zu halten. Auf diese Weise wird die Dekorrelation von aufeinanderfolgenden Aufnahmen eines Bestands (siehe z. B. Fig. 8) durch die zwischenzeitlich eventuell stattfindende Bewegung der Pflanzen beschränkt. Das Gehäuse ist vorzugsweise zumindest stellenweise luft- und/oder wasserdicht, um eine Beeinträchtigung der Erfassungsqualität der Erfassungseinrichtung durch Verschmutzung und/oder Kondensation von Wasser zu reduzieren oder zu vermeiden.

In dem hier dargestellten konkreten Ausführungsbeispiel weist das Gehäuse 66 eine Gehäuseinnenwand 67 und eine Gehäuseaußenwand 68 auf, zwischen denen sich die Erfassungseinrichtungen K befinden. Somit befinden sich die Erfassungseinrichtungen K in einem Hohlraum zwischen der Gehäuseinnenwand 67 und der Gehäuseaußenwand 68. Aufgrund des in dem hier dargestellten Ausführungsbeispiel vorhandenen umgekehrten U-Profils des Gehäuses 66 ist das Gehäuse wie oben bereits erwähnt nach unten offen, d.h. der Innenraum innerhalb der Gehäuseinnenwand 67 ist oben durch die Gehäuseinnenwand 67 und die Gehäuseaußenwand 68 abgedeckt aber es befindet sich keine weitere Gehäusewand auf oder über dem Boden. Das Gehäuse 66 schirmt somit den Innenraum zwischen den Schenkeln des umgekehrten U von Umwelteinflüssen und gegen Lichteinfall ab und ermöglicht die Beobachtung eines Vegetationsbestandes.

Nicht nur bei dem hier vorgestellten Ausführungsbeispiel kann zumindest eine Erfassungseinrichtung an einem (in dem zuvor beschriebenen Sinne) nach unten offenen Gehäuse angeordnet und zumindest in einem Betriebszustand derart ausgerichtet sein, dass die Erfassungseinrichtung den Innenraum zwischen Seitenwänden des Gehäuses und unterhalb einer Decke des Gehäuses erfassen kann. Dabei ist es nicht erforderlich, wenn auch möglich, dass sowohl eine Gehäuseinnenwand als auch eine Gehäuseaußenwand mit einem Hohlraum dazwischen vorhanden sind. Das Gehäuse ist vorzugsweise in der Art eines Fahrzeugs fahrbar und weist zu diesem Zweck zum Beispiel wie in Fig. 6 dargestellt Räder auf. Alternativ kann das Fahrzeug zum Beispiel als Kettenfahrzeug umlaufende Ketten aufweisen. Ferner alternativ oder zusätzlich kann das Fahrzeug einen Antrieb zur Fortbewegung entlang dem Boden aufweisen.

Zurückkommend auf das in Fig. 6 dargestellte Ausführungsbeispiel sind in den örtlichen Bereichen der Erfassungseinrichtungen K jeweils in die Gehäuseinnenwand 67 und optional auch in die Gehäuseaußenwand 68 Sichtfenster 69, 70 eingebracht. Diese sind optional mit einer Einrichtung (die zum Beispiel durch die Steuereinrichtung der Anordnung gesteuert wird) zur automatischen Reinigung der Sichtfenster 69, 70 kombiniert.

Durch eine optionale Drehbarkeit der Erfassungseinrichtungen K und bei entsprechender Einstellung der Blickachsen ist eine Erfassung von Vegetation innerhalb und außerhalb des Gehäuses durch die Sichtfenster 69, 70 hindurch mit zumindest teilweise denselben Erfassungseinrichtungen K möglich. Während zumindest während der Anwesenheit von Tageslicht die Beleuchtungsbedingungen der Umgebung (externe Beleuchtungsbedingungen) die Erfassung von Vegetation auf der Gehäuseaußenseite immer beeinflussen, kann die Erfassung der Vegetation innerhalb des Gehäuses auch unter künstlichen und damit z. B. konstanten Beleuchtungsbedingungen durchgeführt werden. Bei dem Ausführungsbeispiel der Fig. 6 befinden sich am Rand des Gehäuse-Innenraums insgesamt zehn Beleuchtungsquellen 65.

Es kann ferner in dem Gehäuse ein (fixierter oder beweglicher) Lichtschutz eingebaut sein, um das Licht externer Beleuchtungsquellen abschirmen zu können. Im Gehäuseinneren angeordnete künstliche Beleuchtungsquellen können so ausgestaltet sein, dass ein sonnenlichtähnliches Spektrum von Strahlung erzeugt wird und/oder eine möglichst homogene Ausleuchtung des aktuell im Gehäuseinneren untersuchten Bestandes erzielt wird. Der Einfluss der Beleuchtungsbedingungen auf die Erzeugung von Punktwolken sowie die darauf basierende Bestimmung von Werten einer die Vegetation charakterisierenden Größe kann/können somit untersucht werden.

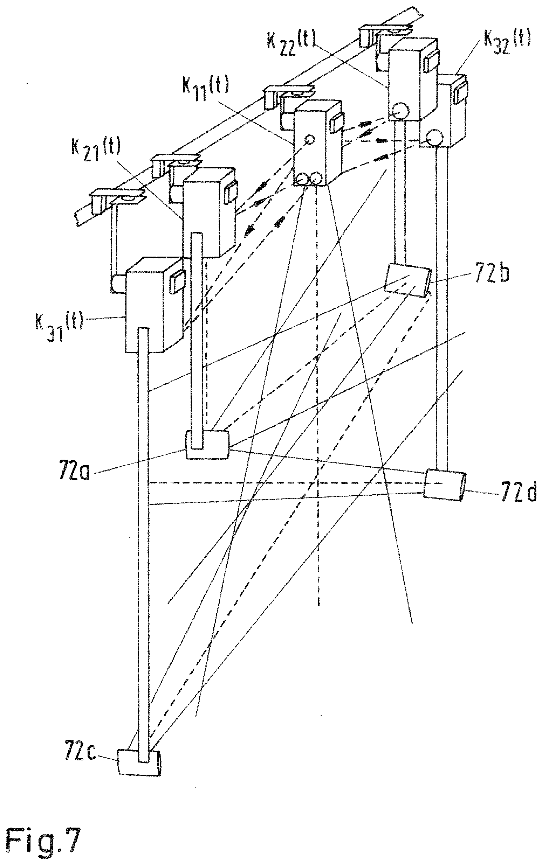

Fig. 7 zeigt eine Variante einer Anordnung mit einer Mehrzahl von fünf Erfassungseinrichtungen K11, K21, K22, K31, K32. Wie auch im Fall der Fig. 6 steht hinter dem Bezugszeichen der jeweiligen Erfassungseinrichtung beispielsweise der Erfassungseinrichtung K11, der Ausdruck "(t)", um die Zeitabhängigkeit der Erfassung bzw. der erzeugten Erfassungsinformation anzudeuten.

Bei der in Fig. 7 dargestellten Anordnung sind die Blickachsen aller Erfassungseinrichtung K11, K21, K22, K31, K32 entlang jeweils einer Vertikalen nach unten auf den Boden gerichtet. Allerdings sind die vier Erfassungseinrichtungen K21, K22, K31, K32, d. h. alle Erfassungseinrichtung mit Ausnahme der Erfassungseinrichtung K11 in der Mitte der Anordnung mit einem Spiegel 72a, 72b, 72c, 72d kombiniert. Dadurch wird erreicht, dass die Blickachse effektiv einer Ausrichtung der Erfassungseinrichtung mit horizontaler Blickachsen oder gegen die Horizontale geneigter Blickachsen entspricht. In dem Ausführungsbeispiel ist der jeweilige Spiegel 72 über eine lang gestreckte steife Verbindung mit der zugeordneten Erfassungseinrichtung K21, K22, K31, K32 verbunden. Fig. 8 zeigt eine Ansicht eines Vegetationsbestandes 82 und einer Anordnung von fünf Erfassungseinrichtungen K11, K21, K22, K31, K32 zu zwei verschiedenen Zeitpunkten t0 und tn. Zwischen diesen Zeitpunkten t0 und tn wurde die Anordnung von Erfassungseinrichtung K11, K21, K22, K31, K32 wie durch gestrichelte Pfeile angedeutet bewegt. Die Erfassungseinrichtungen K11, K21, K22, K31, K32 entsprechen hinsichtlich ihrer effektiven Blickachsen den Erfassungseinrichtungen aus Fig. 7. Allerdings sind bei der Anordnung der Fig. 8 keine Spiegel vorhanden, sondern sind die Erfassungseinrichtungen alle so ausgerichtet, dass sie den Vegetationsbestand 82 oder einen räumlichen Teilbereich davon direkt erfassen. Die Darstellung der Fig. 8 verdeutlicht, dass durch Bewegung einer Anordnung mit zumindest einer Erfassungseinrichtung verschiedene räumliche Bereiche mit Vegetation nacheinander erfasst werden können.

Auch die Blickachsen und/oder erfassten Bereiche der in Zusammenhang mit der Fig. 7 und Fig. 8 erwähnten Erfassungseinrichtungen können anders gewählt bzw. ausgestaltet sein. Insbesondere können die Blickachsen anders ausgerichtet sein und/oder die Öffnungswinkel der Erfassungsbereiche der Erfassungseinrichtungen größer oder kleiner sein. Wie auch in Bezug auf Fig. 6 erwähnt kann eine andere Anzahl von Erfassungseinrichtungen verwendet werden.

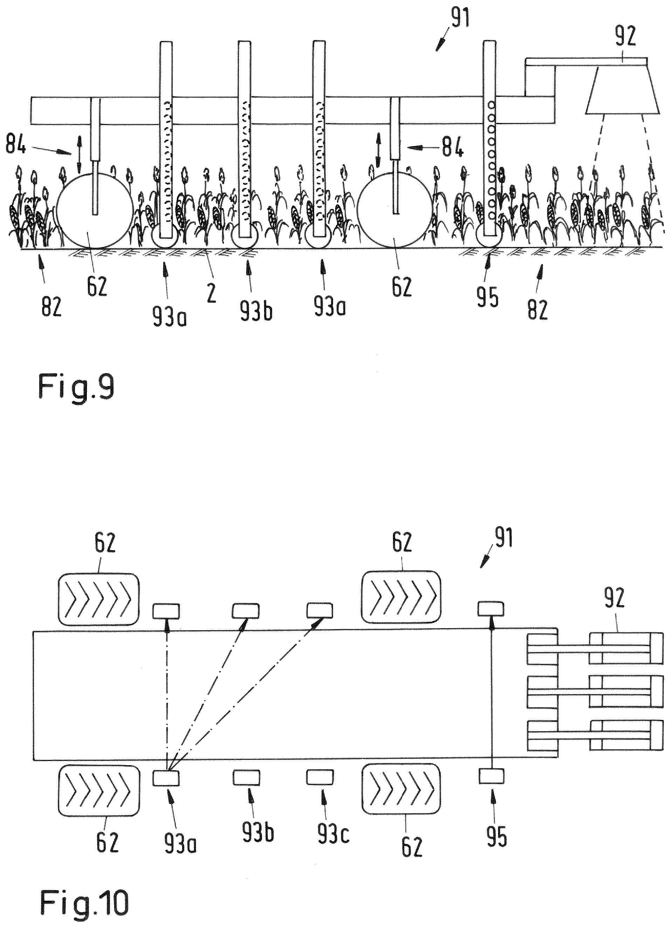

Unter Bezugnahme auf die Fig. 9 bis 11 wird nun ein weiteres Ausführungsbeispiel der Erfindung beschrieben, das bereits kurz erwähnt wurde. Bei diesem Ausführungsbeispiel ist in einer Mehrzahl von Ebenen, hier vertikalen Ebenen, jeweils eine Mehrzahl von Erfassungseinrichtungen vorhanden. Daher kann mit den Erfassungseinrichtungen in den verschiedenen Ebenen gleichzeitig jeweils ein räumlicher Bereich der Vegetation erfasst werden. Dabei ist es möglich, aber keineswegs zwingend erforderlich, dass die Erfassungseinrichtungen, die in derselben Ebene angeordnet sind, einen gemeinsamen räumlichen Bereich der Vegetation erfassen. Vielmehr wird es sogar bevorzugt, dass die Blickachsen zumindest einzelner der Erfassungseinrichtungen mit der Ebene einen Winkel einschließen und somit im Fall der vertikalen Ebene, die senkrecht zur Bewegungsrichtung oder etwa senkrecht zur Bewegungsrichtung verläuft, jeweils zumindest eine Komponente in Bewegungsrichtung haben. Anders ausgedrückt kann die Blickachsen zumindest einer der Erfassungseinrichtungen zum Beispiel schräg nach vorne in Bewegungsrichtung oder schräg nach hinten entgegen der Bewegungsrichtung ausgerichtet sein. Insbesondere dies ermöglicht es, mit Erfassungseinrichtungen aus verschiedenen Ebenen gleichzeitig zumindest teilweise einen gemeinsamen räumlichen Bereich der Vegetation zu erfassen.

Fig. 9 bis 11 zeigen ein Fahrzeug 91, das auf bereiften Rädern 62 fährt. An dem rechts in Fig. 9 dargestellten vorderen Ende des Fahrzeugs 91 befindet sich eine Höhenmesseinrichtung 92, die ausgestaltet ist, die Höhe über dem Boden und/oder über dem Bestand der Vegetation 82 zu messen. Ferner ist das Fahrzeug 91 mit einer Höheneinstelleinrichtung 84 ausgestattet, wie im vorderen und im hinteren Fahrzeugteil durch einen vertikalen Doppelpfeil angedeutet ist. Zum Beispiel durch eine Hydraulik der Höheneinstelleinrichtung 84 kann die Höhe des oberen Fahrzeugteils über dem Boden und somit auch relativ zur Vegetation eingestellt werden. Insbesondere kann dadurch gewährleistet werden, dass die Vegetation 82 über ihre gesamte Höhe von den Erfassungseinrichtungen des Fahrzeugs 91 erfasst wird.

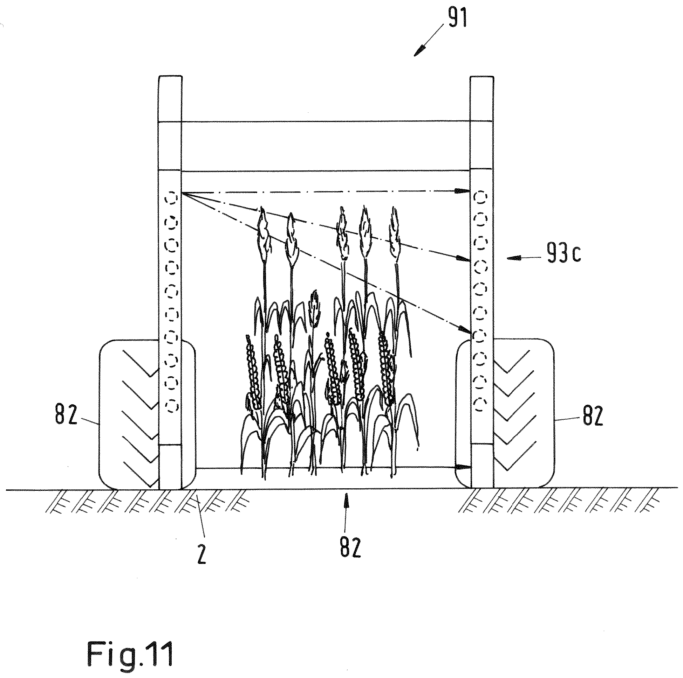

Die Erfassungseinrichtungen des Fahrzeugs 91 sind in drei vertikalen Ebenen 93a, 93b, 93c angeordnet, wobei die Ebenen 93 in Fahrtrichtung (die horizontale Richtung der Fig. 9 und der Fig. 10, die Richtung senkrecht zur Figurenebene der Fig. 11) hintereinander liegen. Ferner verfügt das Fahrzeug 91 über eine Lasermesseinrichtung 95 zur Messung der Höhe des untersuchten Bestandes.

Wie Fig. 11 zeigt, befindet sich ein räumlicher Bereich der Vegetation 82 unterhalb des oberen Fahrzeugteils des Fahrzeugs 91 und zwischen den seitlichen Begrenzungen des Fahrzeugs 91, sodass die Erfassungseinrichtungen der drei Ebenen die Vegetation 82 aus Positionen seitlich des erfassten Bereichs und von oberhalb des erfassten Bereichs erfassen können. Fig. 11 zeigt die in Fahrtrichtung hinten gelegene Ebene der Erfassungseinrichtungen, wobei in dem konkret dargestellten Ausführungsbeispiel keine Erfassungseinrichtungen in dem Querträger oberhalb des erfassten Bereichs der Vegetation 82 angeordnet sind. Jedoch ist ein Teil der Erfassungseinrichtungen, wie durch Pfeile in Fig. 11 angedeutet, so ausgerichtet, dass die Blickachsen von oben nach unten in den erfassten Bereich der Vegetation 82 verlaufen.

Unabhängig von der konkreten Ausführungsform der erfindungsgemäßen Anordnung wird die Vegetation bevorzugter Maßen durch Erfassung aus verschiedenen Blickwinkeln, d. h. entlang nicht paralleler Blickachsen erfasst. Hierdurch wird eine teilweise redundante dreidimensionale Bildinformation gewonnen, aus der zum Beispiel computergestützt eine dreidimensionale räumliche Beschreibung rekonstruiert werden kann.

Aus dieser räumlichen Beschreibung wiederum kann zumindest ein Wert zumindest einer die Vegetation charakterisierenden Größe ermittelt werden. Beispiele für solche Größen wurden genannt.

Alle Ausführungsformen der erfindungsgemäßen Anordnung ermöglichen vorzugsweise u.a. die indirekte Gewinnung von Messwerten zur Biomasse-, Blattflächenindex, Bedeckungsgrad, Bestandshöhe und BBCH-Stadium Die erfindungsgemäße Anordnung ist vorzugsweise modular aufgebaut, sodass verschiedene konkrete Ausführungen unter Verwendung der gleichen Betriebslogik (insbesondere implementiert als Computer-Software) betrieben werden können. Insbesondere kann die Anordnung eine beliebige Kombination der folgenden Module aufweisen:
- Energieversorgung;
- Datenverarbeitungseinheit mit angeschlossenen bildgebenden Sensoren:
- Gehäuse mit Innenbeleuchtung,
- Synchronisierung, um die Daten zeitgleich aufzuzeichnen,
- Horizontal angebaute bildgebende Systeme, sowie
- Optional ein vertikales bildgebendes System ggf. mit Spiegelumlenkung;
- Sende- bzw. Speichereinheit für Daten;
- Bildauswertungssystem;
- Separator zur Separierung der Bilder entsprechend der Tiefenschärfe und der Bereitstellung der einzelnen 3D-Abbildungen entsprechend der Entfernung;
- Klassifikator zur Klassifikation der Bilder in Vegetationsbereiche (z.B. Blätter beschattet und unbeschattet; Untergrund (Boden) beschattet und unbeschattet),
- Teilsystem zur Erstellung einer Datenwolke;
- Datenfusionssystem (Fusionsmechanismen: Zusammenfügung der Vegetationsstrukturen aus den verschiedenen Aufzeichnungsrichtungen und Zusammenführung der verschiedenen Aufnahmerichtungen zu einer 3-D-Struktur)
- stochastisches Modell zur Gewinnung von Bestandsparametern, wie z.B. Vegetationshöhe, Bedeckungsgrad, Bestandsdichte, Biomasse, Blattfläche und Blattflächenindex.

Als bildgebende Systeme dienen vorzugsweise plenoptische Kameras, die Daten verschiedener Tiefenschärfen aufzeichnen können, sodass dreidimensionale Informationen aus einem aufgenommen Bild extrahiert werden können. Die mit Hilfe der plenoptischen Kameras aufgezeichneten Daten können zur Rekonstruktion der Vegetationsarchitektur (3-D-Struktur der Vegetation) genutzt werden.

Darüber hinaus sieht eine mögliche Variante der Erfindung vor, morphologische Parameter und weitere hydrologisch relevante Informationen u.a. landwirtschaftlicher Kulturen mithilfe einer optischen Systembox auf Pflanzenbeständen im Feld zu bestimmen. Mögliche Ausführungsformen der Bewegungseinrichtung können eine beliebige Kombination der folgender Module aufweisen:
- autonomes, höhenverstellbares Fahrzeug mit seitlichen Projektionswänden,
- bildgebendes System horizontal,
- bildgebendes System vertikal,
- Aufzeichnungs-, Speicher- und Auswertungssystem sowie
- In-Situ-Kalibrationssystem (automatische punktuelle Biomasseermittlung bestehend aus einem Zylinder mit Schneide

Die Erfindung ermöglicht die automatische Gewinnung physikalisch begründeter In-situ-Daten von Pflanzenbeständen, die durch nachgeschaltete quantitative Auswerteverfahre weiterverarbeitet werden können. Die verbesserte Bereitstellung von In-situ-Daten wird erreicht, indem über ein Videosystem die räumliche Verteilung des Pflanzenbestandes im Aufriss und Grundriss aufgezeichnet wird.

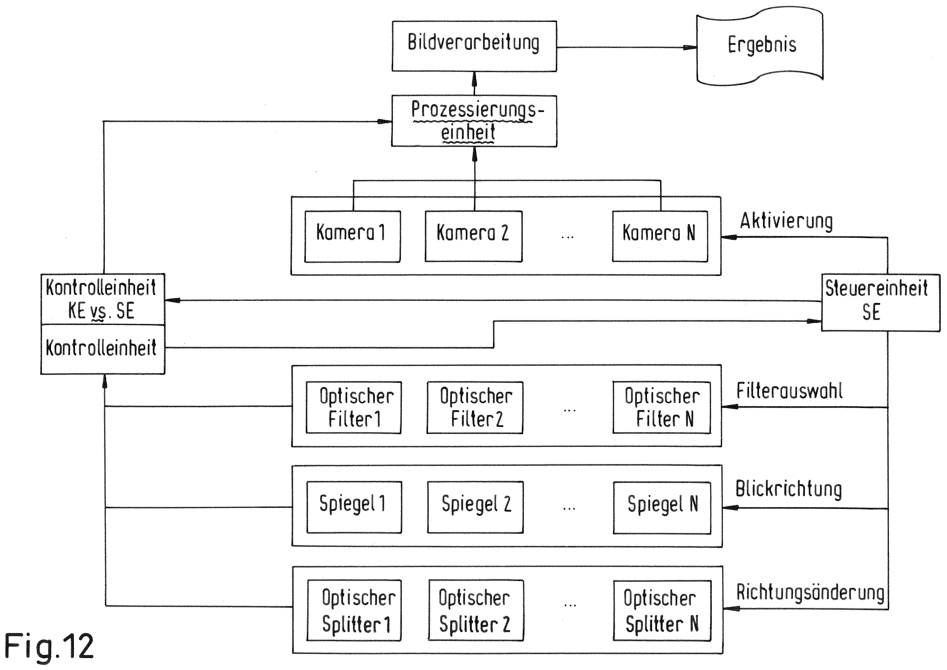

Ein mögliches Prinzip eines Gesamtsystems zur Ausführung der Erfindung ist schematisch in Fig. 12 dargestellt. Es umfasst die Komponenten plenoptische Kamera/Lichtfeldkamera, optischer Filter, Umlenkspiegel, optischer Splitter, Lagemesseinrichtung, Beleuchtungsmittel, Geräteabdeckung, Dämpfungssystem, Kontrolleinheit, Steuereinheiten, Prozessierungseinheit, Auswertungsprogramme, Energieversorgung.

Die vorgeschlagene Anlage und das Verfahren können, unter Bezugnahme auf die ersten beiden beschriebenen Ausführungsbeispiele die folgenden Module oder eine Kombination einzelner dieser Module aufweisen:
- Lichtfeldkamera-Systeme - vorzugsweise aus verschiedenen Richtungen
- Optischer Filter - vorzugsweise in Revolverbauweise, um den Austausch der Filter zu erleichtern,
- Umlenkspiegel - zur Veränderung der Blickrichtung des Sensors (innen, außen)
- Optischer Splitter - zur Vergrößerung des Blickfelds in Messmodus "Außen"
- Messeinrichtung zur Einmessung von Lage und Ausrichtung der Lichtfeldkameras - vorzugsweise Laser
- Sichtfeldbegrenzungen zur Abschirmung benachbarten Bestands, um weitgehend standardisierte Aufnahmebedingungen zu gewährleisten
- Dämpfungssystem zur Abfederung von mechanischen Stößen und Vibrationen des Geräteträgers und während der Fahrt
- Kontrolleinheit zur Kontrolle der Lage der Spiegel, der optischen Filter, der optischen Splitter zur Erfolgskontrolle empfangener Steuerbefehle bzw. bei Nichtausführung der Steuerbefehle zu Fehlermeldung
- Steuereinheiten zur Ausführung der von den Kontrolleinheiten kommenden Steuerbefehle zur Lagesteuerung der Spiegel, der optischen Filter, der optischen Splitter
- Prozessierungseinheiten zur Speicherung empfangener Daten sowie zur Ausführung von mathematisch-physikalischen Datenverarbeitungsprogrammen, um die interessierenden Datenprodukte abzuleiten. Darüber hinaus dient diese Einheit der Auslösung von Steuerbefehlen und dem Empfang von Informationen der Kontrolleinheit.
- Modell zur Ableitung und Auswertung der Punktwolken sowie Berechnung der Vegetationsparameter.
- Energieversorgung bzw. Energieanschluss

Das Verfahren betrifft insbesondere ein berührungsloses abbildendes Messverfahren zur Bestimmung der Bestandsdichte, des Bedeckungsgrads, des Blattflächenindex, der Biomasse und weiterer morphologischer Parameter von Pflanzenbeständen. Der Pflanzenbestand kann z. B. mit zumindest einem Scanner, der auf einem mobilen Träger montiert ist, während der Überfahrt gescannt werden. Die Messdaten können an eine Signal- und Auswerteverarbeitungseinheit weitergegeben werden, die die Daten direkt nach dem Empfang auswertet, und die Daten und Auswertungsergebnisse auf einem Datenträger speichert, so dass diese optional die Generierung von Steuerbefehlen für eine Gerätesteuerung (z.B. Applikation von Agrochemikalien) bzw. für wissenschaftliche Auswertungen genutzt werden können.

Durch die dreidimensionale Messung des Bestands kann eine Art Tomographie realisiert werden, die eine Datenwolke produziert, so dass die beabsichtigten Parameter ermittelt werden können.

Darüber hinaus betrifft die Erfindung ein kombiniertes Verfahren (eine Hardware und Software umfassend), das der kontaktfreien Bestimmung der Biomasse und morphologischer Pflanzenparameter eines Bestandes und der kontaktbezogenen Biomassebestimmung (Feuchte- und Trockenmasse) dient. Dabei werden die Pflanzen zum Beispiel mit Hilfe eines mobil auf einem Träger montierten Sensors (Lichtfeldkamera) abgebildet. Als Lichtquelle dient vorzugsweise die Sonne; es kann aber auch eine zumindest eine künstliche Lichtquelle genutzt werden. Die von Pflanzen und Boden reflektierte Strahlung wird durch die am Träger montierte Lichtfeldkamera erfasst und von dieser nach Wandlung in digitale Signale an eine Auswerte- und Signalverarbeitungseinheit weitergegeben. Diese wertet die Signale entsprechend der Tiefenschärfe aus, so dass ein dreidimensionales Abbild des Bestandes erstellt werden kann. Die Ergebnisse können auf einem Display angezeigt, auf einem Datenträger gespeichert und optional zur Steuerung einer Applikationseinheit für Agrochemikalien genutzt werden. Das Lichtfeld des Bestands kann im deutlichen Abstand von drei Seiten erfasst werden, wobei das Lichtfeld an unterschiedlichen Tiefen der Blätter / Stängel / Äste des Bestandes und ggf. auch des Bodens reflektiert in unterschiedlichen Tiefen in räumlich zuordenbare Signale differenziert werden kann. Die Tiefenschärfe wird nach ihrer Dekodierung als Maß für die aktuelle Biomasse und deren vertikale Verteilung im Bestand genutzt. Punktuell können z. B. in regelmäßigen und / oder unregelmäßigen Abständen destruktiv Pflanzenproben entnommen werden, so dass eine Kalibration der bildgebenden Information mit Hilfe einer gemessenen Biomasse gewonnen werden kann. Die Trockenmasse kann z. B. als Funktion des Kapazitätswertes bestimmt werden.

Ein grundsätzlicher Nachteil von optoelektronischen Verfahren besteht darin, dass die Biomasse nicht direkt, sondern als Funktionswert der Menge von Chlorophyllpigmenten pro Flächeneinheit ermittelt wird. Ändert sich die Chlorophyllkonzentration im Bestand, so wird auch bei gleicher Biomasse eine Messwertänderung angezeigt.

### Bezugszeichenliste

- 1: Anordnung zur Charakterisierung von Vegetation
- 2: Boden
- 3: Geräteabstützung
- 4: Ständer
- 5: Arm
- 7: Gelenk
- 8: Hydraulikeinrichtung
- 9: Revolvergeräteträger
- 11: Erfassungseinrichtung
- 12: Halter
- 13: Lysimeterbehälter
- 15: Versorgungsschacht
- 51: Begrenzungseinrichtung
- 53: Träger
- 54: Gabel
- 55: Forke
- 59: Geräteträger
- 61: Fahrzeug
- 62: Rad
- 63: Rahmenträger
- 64: Spiegel
- 65: Beleuchtungsquelle
- 66: Gehäuse
- 67: Gehäuseinnenwand
- 68: Gehäuseaußenwand
- 69: Sichtfenster in der Gehäuseaußenwand
- 70: Sichtfenster in der Gehäuseinnenwand
- 72: Spiegel
- 82: Vegetation
- 84: Höheneinstelleinrichtung
- 91: Fahrzeug
- 92: Höhenmesseinrichtung
- 93: Ebene mit Erfassungseinrichtungen
- 94: Höheneinstelleinrichtung
- 95: Lasermesseinrichtung
- K: Kamera oder Lochkamera

## Patentansprüche

1. Anordnung zur Charakterisierung von Vegetation (82), wobei die Anordnung aufweist:
- eine Erfassungseinrichtung (11) zur Erfassung der Vegetation (82), die ausgestaltet ist, bei der Erfassung dreidimensionale Bildinformation über die Vegetation (82) zu erzeugen,
- einen Revolvergeräteträger (9) und
- eine Auswertungseinrichtung, die ausgestaltet ist, aus der dreidimensionalen Bildinformation zumindest eine die Vegetation (82) charakterisierende Größe zu ermitteln,
wobei die Erfassungseinrichtung (11) an einer Unterseite des Revolvergeräteträgers (9) angeordnet ist, wobei der Revolvergeräteträger (9) an einer beweglichen Geräteabstützung (3) anordenbar ist und um eine Drehachse drehbar ist und wobei die Erfassungseinrichtung (11) durch eine Drehung des Revolvergeräteträgers (9) um die Drehachse in eine Position zur Erfassung der Vegetation (82) bringbar ist.

2. Anordnung nach Anspruch 1, wobei die von der Erfassungseinrichtung (11) erzeugte dreidimensionale Bildinformation
- Intensitätsinformation über Intensitäten der von der Vegetation (82) auf die Erfassungseinrichtung (11) einfallenden elektromagnetischen Strahlung und
- Richtungsinformation über die Errichtung der einfallenden elektromagnetischen Strahlung aufweist.

3. Anordnung nach Anspruch 2, wobei die Erfassungseinrichtung (11) zumindest eine plenoptische Kamera aufweist.

4. Anordnung nach Anspruch 2 oder 3, wobei die Anordnung eine Verarbeitungseinrichtung aufweist, die ausgestaltet ist, aus der erzeugten dreidimensionalen Bildinformation eine Anordnung von Punkten in einem dreidimensionalen Koordinatensystem der erfassten Vegetation (82) zu erzeugen, wobei jeder der Punkte einem Punkt auf der Oberfläche der Vegetation (82) oder der Oberfläche anderer Materie in dem erfassten Bereich der Vegetation (82) entspricht und wobei die Verarbeitungseinrichtung jedem der Punkte eine Intensität und optional auch eine Wellenlänge oder Frequenz der von dem Punkt ausgehenden elektromagnetischen Strahlung zuordnet.

5. Anordnung nach einem der Ansprüche 1 bis 4, wobei der Revolvergeräteträger derart ausgestaltet ist, dass die Erfassungseinrichtung (11) zumindest auch in eine Erfassungsposition seitlich der Vegetation (82) bringbar ist, sodass die von der Erfassungseinrichtung (11) erzeugte Bildinformation zumindest auch aus der Erfassungsposition seitlich der Vegetation (82) erzeugte Bildinformation ist.

6. Anordnung nach einem der Ansprüche 1-5, wobei die Erfassungseinrichtung (11) und eine Begrenzungseinrichtung (51) zur Begrenzung eines zu erfassenden räumlichen Bereichs der Vegetation (82) in einem Abstand zueinander angeordnet sind, wobei die Erfassungseinrichtung (11) auf eine Oberfläche der Begrenzungseinrichtung (51) ausgerichtet ist, sodass zwischen der Erfassungseinrichtung (11) und der Begrenzungseinrichtung (51) angeordnete Vegetation (82) von der Erfassungseinrichtung (11) erfassbar ist.

7. Anordnung nach Anspruch 6, wobei eine Bewegungseinrichtung, die den Revolvergeräteträger aufweist, ausgestaltet ist, die Erfassungseinrichtung (11) und die Begrenzungseinrichtung (51) derart gemeinsam relativ zu der Vegetation (82) zu bewegen, dass nacheinander verschiedene räumliche Bereiche der Vegetation (82) von der Erfassungseinrichtung (11) erfassbar sind.

8. Anordnung nach einem der Ansprüche 1 bis 7, wobei ein von der Erfassungseinrichtung erfasster Raum gegen Umgebungslicht abgeschirmt ist und eine künstliche Beleuchtung zur Beleuchtung des erfassten Raumes vorhanden ist.

9. Verfahren zur Charakterisierung von Vegetation (82), wobei
- eine Erfassungseinrichtung (11) zur Erfassung der Vegetation (82) verwendet wird, die bei der Erfassung dreidimensionale Bildinformation über die Vegetation (82) erzeugt, und
- aus der dreidimensionalen Bildinformation zumindest eine die Vegetation (82) charakterisierende Größe ermittelt wird
wobei die Erfassungseinrichtung (11) an einer Unterseite eines Revolvergeräteträgers (9) angeordnet ist, wobei der Revolvergeräteträger (9) an einer beweglichen Geräteabstützung (3) angeordnet ist und um eine Drehachse drehbar ist und wobei die Erfassungseinrichtung (11) durch eine Drehung des Revolvergeräteträgers (9) um die Drehachse in eine Position zur Erfassung der Vegetation (82) gebracht wird.

10. Verfahren nach Anspruch 9, wobei die von der Erfassungseinrichtung (11) erzeugte dreidimensionale Bildinformation
- Intensitätsinformation über Intensitäten der von der Vegetation (82) auf die Erfassungseinrichtung (11) einfallenden elektromagnetischen Strahlung und
- Richtungsinformation über die Errichtung der einfallenden elektromagnetischen Strahlung aufweist.

11. Verfahren nach Anspruch 9 oder 10, wobei zumindest eine plenoptische Kamera der Erfassungseinrichtung (11) die dreidimensionale Bildinformation über die Vegetation (82) erzeugt.

12. Verfahren nach einem der Ansprüche 9 bis 11, wobei aus der erzeugten dreidimensionalen Bildinformation eine Anordnung von Punkten in einem dreidimensionalen Koordinatensystem der erfassten Vegetation (82) erzeugt wird, wobei jeder der Punkte einem Punkt auf der Oberfläche der Vegetation (82) oder der Oberfläche anderer Materie in dem erfassten Bereich der Vegetation (82) entspricht und wobei jedem der Punkte eine Intensität und optional auch eine Wellenlänge oder Frequenz der von dem Punkt ausgehenden elektromagnetischen Strahlung zugeordnet wird.

13. Verfahren nach einem der Ansprüche 9 bis 12, wobei die Bewegungseinrichtung die Erfassungseinrichtung (11) zumindest auch in eine Erfassungsposition seitlich der Vegetation (82) bringt, die von der Erfassungseinrichtung (11) erzeugte Bildinformation zumindest auch aus der Erfassungsposition seitlich der Vegetation (82) erzeugt wird.

14. Verfahren nach einem der Ansprüche 9 bis 13, wobei die Erfassungseinrichtung (11) und eine Begrenzungseinrichtung (51) zur Begrenzung eines zu erfassenden räumlichen Bereichs der Vegetation (82) in einem Abstand zueinander angeordnet werden, wobei die Erfassungseinrichtung (11) auf eine Oberfläche der Begrenzungseinrichtung (51) ausgerichtet ist und dabei zwischen der Erfassungseinrichtung (11) und der Begrenzungseinrichtung (51) angeordnete Vegetation (82) erfasst.

15. Verfahren nach Anspruch 14, wobei die Erfassungseinrichtung (11) und die Begrenzungseinrichtung (51) derart gemeinsam relativ zu der Vegetation (82) bewegt werden, dass nacheinander verschiedene räumliche Bereiche der Vegetation (82) von der Erfassungseinrichtung (11) erfasst werden

## Claims

1. An assembly for characterizing vegetation (82), wherein the assembly comprises:
- a detection device (11) for detecting the vegetation (82), which is configured to generate three-dimensional image information regarding the vegetation (82) during the detection,
- a revolver instrument carrier (9) and
- an evaluation device, which is configured to ascertain at least one variable characterizing the vegetation (82) from the three-dimensional image information,
wherein the detection device (11) is arranged on a lower side of the revolver instrument carrier (9), wherein the revolver instrument carrier (9) can be arranged on a movable instrument support (3) and is rotatable about an axis of rotation and wherein the detection device (11) can be brought into a position for detecting the vegetation (82) by rotating the revolver instrument carrier (9) about the axis of rotation.

2. The assembly according to claim 1, wherein the three-dimensional image information generated by the detection device (11) comprises
- intensity information relating to intensities of the electromagnetic radiation that is incident on the detection device (11) from the vegetation (82) and
- directional information relating to setting up the incident electromagnetic radiation.

3. The assembly according to claim 2, wherein the detection device (11) comprises at least one plenoptic camera.

4. The assembly according to claim 2 or 3, wherein the assembly comprises a processing device, which is configured to generate an arrangement of points in a three-dimensional coordinate system of the detected vegetation (82) from the generated three-dimensional image information, wherein each of the points corresponds to a point on the surface of the vegetation (82) or the surface of other matter in the detected region of the vegetation (82) and wherein the processing device assigns to each of the points an intensity and optionally also a wavelength or frequency of the electromagnetic radiation originating from the point.

5. The assembly according to any one of claims 1 to 4, wherein the revolver instrument carrier is configured such that the detection device (11) can at least also be brought into a detection position to the side of the vegetation (82), such that the image information generated by the detection device (11) is at least also image information generated from the detection position to the side of the vegetation (82).

6. The assembly according to any one of claims 1-5, wherein the detection device (11) and a limiting device (51) for limiting a spatial region of the vegetation (82) to be detected are arranged at a distance from one another, wherein the detection device (11) is aligned to a surface of the limiting device (51) such that vegetation (82) arranged between the detection device (11) and the limiting device (51) can be detected by the detection device (11).

7. The assembly according to claim 6, wherein a movement device, which comprises the revolver instrument carrier, is configured to move the detection device (11) and the limiting device (51) together relative to the vegetation (82) such that different spatial regions of the vegetation (82) can be detected by the detection device (11) in succession.

8. The assembly according to any one of claims 1 to 7, wherein a space detected by the detection device is shielded against ambient light and artificial illumination is provided to illuminate the detected space.

9. A method for characterizing vegetation (82), wherein
- a detection device (11) for detecting the vegetation (82) is used, which generates three-dimensional image information regarding the vegetation (82) during the detection,
- at least one variable characterizing the vegetation (82) is ascertained from the three-dimensional image information,
wherein the detection device (11) is arranged on a lower side of a revolver instrument carrier (9), wherein the revolver instrument carrier (9) is arranged on a movable instrument support (3) and is rotatable about an axis of rotation and wherein the detection device (11) is brought into a position for detecting the vegetation (82) by rotating the revolver instrument carrier (9) about the axis of rotation.

10. The method according to claim 9, wherein the three-dimensional image information generated by the detection device (11) comprises
- intensity information relating to intensities of the electromagnetic radiation that is incident on the detection device (11) from the vegetation (82) and
- directional information relating to setting up the incident electromagnetic radiation.

11. The method according to claim 9 or 10, wherein at least one plenoptic camera of the detection device (11) generates the three-dimensional image information regarding the vegetation (82).

12. The method according to any one of claims 9 to 11, wherein an arrangement of points in a three-dimensional coordinate system of the detected vegetation (82) is generated from the generated three-dimensional image information, wherein each of the points corresponds to a point on the surface of the vegetation (82) or the surface of other matter in the detected region of the vegetation (82) and wherein each of the points is assigned an intensity and optionally also a wavelength or frequency of the electromagnetic radiation originating from the point.

13. The method according to any one of claims 9 to 12, wherein the movement device brings the detection device (11) at least also into a detection position to the side of the vegetation (82), the image information generated by the detection device (11) is at least also generated from the detection position to the side of the vegetation (82).

14. The method according to any one of claims 9 to 13, wherein the detection device (11) and a limiting device (51) for limiting a spatial region of the vegetation (82) to be detected are arranged at a distance from one another, wherein the detection device (11) is aligned to a surface of the limiting device (51) and, in this state, detects vegetation (82) arranged between the detection device (11) and the limiting device (51).

15. The method according to claim 14, wherein the detection device (11) and the limiting device (51) are moved together relative to the vegetation (82) such that different spatial regions of the vegetation (82) are detected by the detection device (11) in succession.

## Revendications

1. Ensemble destiné à caractériser une végétation (82), dans lequel l'ensemble comprend :
- un dispositif de détection (11) destiné à détecter la végétation (82), qui est configuré pour générer une information d'image tridimensionnelle relative à la végétation (82) pendant la détection,
- un porteur d'instrument rotatif (9) et
- un dispositif d'évaluation, qui est configuré pour déterminer au moins une variable caractérisant la végétation (82) depuis l'information d'image tridimensionnelle,
dans lequel le dispositif de détection (11) est agencé sur un côté inférieur du porteur d'instrument rotatif (9), dans lequel le porteur d'instrument rotatif (9) est apte à être positionné à un support d'instrument mobile (3) et est apte à tourner autour d'un axe de rotation et dans lequel le dispositif de détection (11) est apte à être amené dans une position destinée à détecter la végétation (82) en faisant tourner le porteur d'instrument rotatif (9) autour de l'axe de rotation.

2. Ensemble selon la revendication 1, dans lequel l'information d'image tridimensionnelle générée par le dispositif de détection (11) comprend
- une information d'intensité relative aux intensités des rayonnements électromagnétiques qui sont incidents sur le dispositif de détection (11) depuis la végétation (82) et
- une information directionnelle relative au paramétrage des rayonnements électromagnétiques incidents.

3. Ensemble selon la revendication 2, dans lequel le dispositif de détection (11) comprend au moins une caméra plénoptique.

4. Ensemble selon la revendication 2 ou 3, dans lequel l'ensemble comprend un dispositif de traitement, qui est configuré pour générer un agencement de points dans un système de coordonnées tridimensionnelles de la végétation (82) détectée depuis l'information d'image tridimensionnelle générée, dans lequel chacun des points correspond à un point à la surface de la végétation (82) ou à la surface d'autres matières dans la région détectée de la végétation (82) et dans lequel le dispositif de traitement attribué à chacun des points une intensité et en option également une longueur d'onde ou une fréquence des rayonnements électromagnétiques ayant pour origine le point.

5. Ensemble selon l'une quelconque des revendications 1 à 4, dans lequel le porteur d'instrument rotatif est configuré de telle sorte que le dispositif de détection (11) peut au moins également être amené dans une position de détection latérale relative à la végétation (82), de telle sorte que l'information d'image générée par le dispositif de détection (11) est au moins également une information d'image générée depuis la position de détection latérale relative à la végétation (82).

6. Ensemble selon l'une quelconque des revendications 1 à 5, dans lequel le dispositif de détection (11) et un dispositif de limitation (51) destiné à limiter une région spatiale de la végétation (82) à détecter sont agencées à une distance l'un de l'autre, dans lequel le dispositif de détection (11) est aligné sur une surface du dispositif de limitation (51) de telle sorte que la végétation (82) agencée entre le dispositif de détection (11) et le dispositif de limitation (51) peut être détectée par le dispositif de détection (11).

7. Ensemble selon la revendication 6, dans lequel un dispositif de mouvement, qui comprend le porteur d'instrument rotatif, est configuré pour déplacer le dispositif de détection (11) et le dispositif de limitation (51) conjointement par rapport à la végétation (82) de telle sorte que différentes régions spatiales de la végétation (82) peuvent être détectées par le dispositif de détection (11) de manière successive.

8. Ensemble selon l'une quelconque des revendications 1 à 7, dans lequel un espace détecté par le dispositif de détection est protégé contre la lumière ambiante et un éclairage artificiel est fourni pour éclairer l'espace détecté.

9. Procédé de caractérisation de végétation (82), dans lequel
- un dispositif de détection (11) destiné à détecter la végétation (82), qui génère une information d'image tridimensionnelle relative à la végétation (82) pendant la détection, est utilisé,
- au moins une variable caractérisant la végétation (82) est déterminée depuis l' information d'image tridimensionnelle,
dans lequel le dispositif de détection (11) est agencé sur un côté inférieur d'un porteur d'instrument rotatif (9), dans lequel le porteur d'instrument rotatif (9) est agencé sur un support d'instrument mobile (3) et est apte à tourner autour d'un axe de rotation et dans lequel le dispositif de détection (11) est amené dans une position destinée à détecter la végétation (82) en faisant tourner le porteur d'instrument rotatif (9) autour de l'axe de rotation.

10. Procédé selon la revendication 9, dans lequel l'information d'image tridimensionnelle générées par le dispositif de détection (11) comprend
- une information d'intensité relative aux intensités des rayonnements électromagnétiques qui sont incidents sur le dispositif de détection (11) depuis la végétation (82) et
- une information directionnelle relative au paramétrage des rayonnements électromagnétiques incidents.

11. Procédé selon la revendication 9 ou 10, dans lequel au moins une caméra plénoptique du dispositif de détection (11) génère l'information d'image tridimensionnelle relative à la végétation (82).

12. Procédé selon l'une quelconque des revendications 9 à 11, dans lequel un agencement de points dans un système de coordonnées tridimensionnelles de la végétation (82) détectée est généré depuis l'information d'image tridimensionnelle générée, dans lequel chacun des points correspond à un point à la surface de la végétation (82) ou à la surface d'autres matières dans la région détectée de la végétation (82) et dans lequel à chacun des points sont attribuées une intensité et en option également une longueur d'onde ou une fréquence des rayonnements électromagnétiques ayant pour origine le point.

13. Procédé selon l'une quelconque des revendications 9 à 12, dans lequel le dispositif de mouvement amène le dispositif de détection (11) au moins également dans une position de détection latérale relative à la végétation (82), et l'information d'image générée par le dispositif de détection (11) est au moins également générée depuis la position de détection latérale relative à la végétation (82).

14. Procédé selon l'une quelconque des revendications 9 à 13, dans lequel le dispositif de détection (11) et un dispositif de limitation (51) destiné à limiter une région spatiale de la végétation (82) à détecter sont agencés à une distance l'un de l'autre, dans lequel le dispositif de détection (11) est aligné sur une surface du dispositif de limitation (51) et ainsi détecte la végétation (82) agencée entre le dispositif de détection (11) et le dispositif de limitation (51).

15. Procédé selon la revendication 14, dans lequel le dispositif de détection (11) et le dispositif de limitation (51) sont déplacés conjointement par rapport à la végétation (82) de telle sorte que différentes régions spatiales de la végétation (82) sont détectées par le dispositif de détection (11) de manière successive.
